# EUROPEAN PATENT APPLICATION

(11) **EP 4 694 544 A1**
(43) Date of publication of application: **11.02.2026**
(21) Application number: 24791837.8
(22) Date of filing: 29.03.2024
(51) Int. Cl.: H04W 76/10

(54) **COMMUNICATION METHOD AND COMMUNICATION APPARATUS**

(30) Priority: 19.04.2023 CN 202310424911
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN); HUANG, Kang, Shenzhen, Guangdong 518129 (CN)
(74) Representative: Thun, Clemens
(86) International application number: PCT/CN2024/084661
(87) International publication number: WO 2024/217251

(57) **Abstract**

Embodiments of this application provide a communication method and a communication apparatus. The communication method includes: A first network element receives request information from a second network element, where the request information indicates to perform an operation on a terminal device; the first network element obtains first indication information based on the request information; the first network element determines, based on the first indication information, that transmission of uplink data of the terminal device is performed via a user plane; the first network element sends second indication information to an access network device, where the second indication information indicates that the transmission of the uplink data is performed via the user plane, or the second indication information indicates the access network device to determine that the transmission of the uplink data of the terminal device is performed via the user plane. Therefore, the transmission of the uplink data of the terminal device is performed via the user plane based on the indication of the first network element, instead of a control plane network element in some specific scenarios, thereby ensuring data privacy.

## Description

This application claims priority to Chinese Patent Application No. 202310424911.6, filed with the China National Intellectual Property Administration on April 19, 2023 and entitled "COMMUNICATION METHOD AND COMMUNICATION APPARATUS", which is incorporated herein by reference in its entirety.

### TECHNICAL FIELD

Embodiments of this application relate to the field of wireless communication technologies, and more specifically, to a communication method and a communication apparatus.

### BACKGROUND

Currently, transmission of uplink and downlink data of a passive internet of things is performed via core network elements (usually an access and mobility management function (access and mobility management function, AMF) network element, a network exposure function (network exposure function, NEF) network element, and the like). For example, for an inventory operation, an enterprise sends an instruction to a tag via a core network and a reader. After accessing the reader through random access, the tag sends a tag identifier to an AMF. The AMF manages and sends the tag identifier to the enterprise via a NEF. For another example, for a read/write operation, after receiving a tag identifier, the AMF/the enterprise feeds back a read/write operation instruction to the tag, and the AMF feeds back data to the enterprise after receiving the data read by the tag or a write success indication.

However, in some scenarios, for example, for confidential data or private data, how to select a more appropriate transmission manner to perform transmission of uplink data is a problem to be urgently resolved.

### SUMMARY

Embodiments of this application provide a communication method. Transmission of uplink data of a terminal device is performed based on indication of a first network element via a user plane, instead of a control plane network element in some specific scenarios, thereby ensuring data privacy.

According to a first aspect, a communication method is provided. The method may be performed by a first network element, or may be performed by a component (for example, a chip or a circuit) of the first network element. This is not limited. For ease of description, the following uses an example in which the method is performed by the first network element for description.

The method may include: The first network element receives request information from a second network element, where the request information indicates to perform an operation on a terminal device, and the terminal device is a device that supports a passive internet of things service; the first network element obtains first indication information based on the request information; the first network element determines, based on the first indication information, that transmission of uplink data of the terminal device is performed via a user plane; and the first network element sends second indication information to an access network device, where the second indication information indicates that the transmission of the uplink data of the terminal device is performed via the user plane, or the second indication information indicates the access network device to determine that the transmission of the uplink data of the terminal device is performed via the user plane.

In the foregoing solution, the transmission of the uplink data of the terminal device is performed via the user plane based on the indication of the first network element, instead of a control plane network element in some specific scenarios, thereby ensuring data privacy.

In a possible implementation, the method further includes: The first network element obtains address information of a user plane function network element from a session management function network element or the user plane function network element; or the first network element obtains address information of a user plane function network element from information stored in the first network element; and after that the first network element determines, based on the first indication information, that the transmission of the uplink data of the terminal device is performed via the user plane, the method further includes: The first network element sends the address information of the user plane function network element to the access network device.

In the foregoing solution, the first network element can obtain the address information of the user plane function network element from the session management function network element or the user plane function network element, or from the locally stored information, and send the address information of the user plane function network element to the access network device, so that diversity of a solution in which the first network element obtains the address information of the user plane function network element is increased.

In a possible implementation, the method further includes: The first network element sends third indication information to the access network device, where the third indication information indicates the terminal device to encapsulate the data by using an application layer protocol.

In the foregoing solution, the first network element indicates, to the access network device, the terminal device to encapsulate the data by using the application layer protocol, to avoid that the access network device senses user equipment, and improve data privacy.

In a possible implementation, the method further includes: The first network element obtains a correspondence between an identifier of the second network element and address information of the second network element from a unified database network element; and the first network element sends the correspondence between the identifier of the second network element and the address information of the second network element to the user plane function network element.

In the foregoing solution, the first network element can send the obtained correspondence between the identifier of the second network element and the address information of the second network element to the user plane function network element, so that the user plane function network element forwards the uplink data of the terminal device based on the correspondence.

In a possible implementation, the method further includes: The first network element obtains a correspondence between a virtual address of the access network device or the terminal device and the address information of the second network element from the unified database network element; and the first network element sends the correspondence between the virtual address of the access network device or the terminal device and the address information of the second network element to the user plane function network element.

In the foregoing solution, the first network element can send the obtained correspondence between the virtual address of the access network device or the terminal device and the address information of the second network element to the user plane function network element, so that the user plane function network element forwards the uplink data of the terminal device based on the correspondence.

In a possible implementation, that the first network element sends the address information of the user plane function network element to the access network device includes: The first network element sends user plane transmission layer information to the access network device, where the user plane transmission layer information includes a tunnel endpoint identifier and the address information of the user plane function network element.

In the foregoing solution, when the transmission of the uplink data of the terminal device is performed based on a GTP-U layer, the first network element includes the address information of the user plane function network element in the user plane transmission layer information and sends the user plane transmission layer information to the access network device, to indicate the access network device to send the data to a correct user plane function network element.

In a possible implementation, that the first network element sends the address information of the user plane function network element to the access network device includes: The first network element sends the virtual address of the terminal device or the access network device to the access network device, to indicate the access network device to include the virtual address in an IP packet header or replace an IP address of the access network device in the IP packet header with the virtual address.

In the foregoing solution, when the transmission of the uplink data of the terminal device is performed based on an IP layer, the first network element sends the virtual address of the terminal device or the access network device to the access network device, to avoid that the second network element senses real address information of the access network device.

In a possible implementation, the request information includes the first indication information.

In the foregoing solution, the first network element can obtain the first indication information from the received request information of the second network element, so that diversity of a solution in which the first network element obtains the first indication information is increased.

In a possible implementation, the request information includes the identifier of the second network element, and that the first network element obtains the first indication information based on the request information includes: The first network element obtains subscription data of the second network element based on the identifier of the second network element, where the subscription data includes the first indication information.

In the foregoing solution, the first network element can query for and obtain the subscription data of the second network element based on the identifier of the second network element in the received request information of the second network element, and obtain the first indication information from the subscription data, so that diversity of a solution in which the first network element obtains the first indication information is increased.

According to a second aspect, a communication method is provided. The method may be performed by an access network device, or may be performed by a component (for example, a chip or a circuit) of the access network device. This is not limited. For ease of description, the following uses an example in which the method is performed by the access network device for description.

The method may include: An access network device receives second indication information from a first network element, where the second indication information indicates that transmission of uplink data of a terminal device is performed via a user plane, or the second indication information indicates the access network device to determine that the transmission of the uplink data of the terminal device is performed via the user plane; and the access network device sends third indication information to the terminal device based on the second indication information, where the third indication information indicates the terminal device to encapsulate the data by using an application layer protocol, and the terminal device is a device that supports a passive internet of things service.

In the foregoing solution, the access network device can learn, based on an indication of the first network element, that the transmission of the uplink data of the terminal device is performed via the user plane, and indicate the terminal device to encapsulate the data by using the application layer protocol, instead of a control plane network element in some specific scenarios, thereby ensuring data privacy.

In a possible implementation, when the second indication information indicates the access network device to determine that the transmission of the uplink data of the terminal device is performed via the user plane, that the access network device sends the third indication information to the terminal device based on the second indication information includes: When the access network device finds a user plane transmission instruction in configuration information of the access network device based on the second indication information, the access network device determines that the transmission of the uplink data of the terminal device is performed via the user plane; and the access network device sends the third indication information to the terminal device.

In the foregoing solution, the access network device can determine, based on the second indication information, that the transmission of the uplink data of the terminal device is performed via the user plane, and indicate the terminal device to encapsulate the data by using the application layer protocol, so that diversity of a manner in which the access network device learns that the transmission of the uplink data of the terminal device is performed via the user plane is increased.

In a possible implementation, the method further includes: When the access network device does not find the user plane transmission instruction in the configuration information of the access network device based on the second indication information, the access network device determines that the transmission of the uplink data of the terminal device is performed via a control plane.

In a possible implementation, the method further includes: The access network device obtains a correspondence between address information of a user plane function network element and an identifier of a second network element; the access network device receives a first data packet from the terminal device, where the first data packet includes the data encapsulated by using the application layer protocol, and/or the identifier of the second network element; the access network device determines the address information of the user plane function network element based on the identifier of the second network element and the correspondence between the address information of the user plane function network element and the identifier of the second network element; and the access network device sends the first data packet to the user plane function network element based on the address information of the user plane function network element.

In the foregoing solution, the access network device sends, to the corresponding user plane function network element based on the identifier of the second network element from the terminal device, the data that is from the terminal device and that is encapsulated by using the application layer protocol, so that the transmission of the uplink data of the terminal device is performed via the user plane.

In a possible implementation, that the access network device obtains the correspondence between the address information of the user plane function network element and the identifier of the second network element includes: The access network device receives the correspondence between the address information of the user plane function network element from the first network element and the identifier of the second network element; or the access network device obtains the correspondence between the address information of the user plane function network element and the identifier of the second network element from the configuration information of the access network device.

In the foregoing solution, the access network device can obtain the correspondence between the address information of the user plane function network element and the identifier of the second network element via the first network element or by querying the local configuration information, so that diversity of a manner of obtaining the correspondence between the address information of the user plane function network element and the identifier of the second network element is increased.

In a possible implementation, the method further includes: The access network device obtains the address information of the user plane function network element; the access network device receives the first data packet from the terminal device, where the first data packet includes the data encapsulated by using the application layer protocol, and/or the identifier of the second network element; and the access network device sends the first data packet to the user plane function network element based on the address information of the user plane function network element.

In the foregoing solution, the access network device sends, to the corresponding user plane function network element based on the identifier of the second network element in the first data packet from the terminal device, the data that is from the terminal device and that is encapsulated by using the application layer protocol, so that the transmission of the uplink data of the terminal device is performed via the user plane.

In a possible implementation, that the access network device obtains the address information of the user plane function network element includes: The access network device obtains the correspondence between the address information of the user plane function network element and the identifier of the second network element; and the access network device determines the address information of the user plane function network element based on the identifier of the second network element and the correspondence between the address information of the user plane function network element and the identifier of the second network element.

In a possible implementation, that the access network device sends the first data packet to the user plane function network element based on the address information of the user plane function network element includes: The access network device adds a virtual address of the terminal device or the access network device, the identifier of the second network element, and the address information of the user plane function network element to a packet header of the first data packet, to generate a second data packet; and the access network device sends the second data packet to the user plane function network element based on the address information of the user plane function network element.

In the foregoing solution, when a plurality of access network devices correspond to a plurality of different second network elements, the access network device includes the identifier of the second network element in a data packet and sends the data packet to the user plane function network element, so that the user plane function network element sends the data packet to the second network element based on the identifier of the second network element.

In a possible implementation, the method further includes: The access network device receives user plane transmission layer information from the first network element and the identifier of the second network element, where the user plane transmission layer information includes a tunnel endpoint identifier and the address information of the user plane function network element.

In a possible implementation, that the access network device sends the first data packet to the user plane function network element based on the address information of the user plane function network element includes: The access network device adds the identifier of the second network element to a packet header of the first data packet, to generate the second data packet; and the access network device sends the second data packet to the user plane function network element based on the address information of the user plane function network element.

In the foregoing solution, the access network device adds the identifier of the second network element that receives a data packet to a packet header of the data packet, and sends the data packet to the user plane function network element, so that the user plane function network element determines, based on the identifier of the second network element in the packet header, the second network element that receives the data packet.

In a possible implementation, the method further includes: The access network device receives the third indication information from the first network element.

In a possible implementation, that the access network device sends the third indication information to the terminal device based on the second indication information includes: The access network device generates the third indication information based on the second indication information; and the access network device sends the third indication information to the terminal device.

In a possible implementation, the method further includes: The access network device receives fourth indication information from the terminal device, where the fourth indication information indicates that transmission of the first data packet is performed via the user plane, and the first data packet includes the data encapsulated by using the application layer protocol, and/or the identifier of the second network element.

In the foregoing solution, the access network device can directly learn, based on an indication from the terminal device, that the transmission of the uplink data is performed via the user plane without an indication from a core network, to reduce signaling overheads.

According to a third aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: The terminal device generates a first data packet, where the first data packet includes data encapsulated by using an application layer protocol, and/or an identifier of a second network element, the terminal device is a device that supports a passive internet of things service, and the second network element is a device that requests to perform an operation on the terminal device; and the terminal device sends the first data packet to an access network device.

In the foregoing solution, the terminal device sends, to the access network device, a data packet encapsulated by using the application layer protocol, so that transmission of uplink data of the terminal device is performed via a user plane. In this way, the transmission of the uplink data can be performed not via a control plane network element in some specific scenarios, thereby ensuring data privacy.

In a possible implementation, the method further includes: The terminal device receives third indication information from the access network device, where the third indication information indicates the terminal device to encapsulate the data by using the application layer protocol. That the terminal device generates the first data packet includes: The terminal device generates the first data packet based on the third indication information.

In the foregoing solution, the terminal device can encapsulate the data packet by using the application layer protocol based on an indication of the access network device, so that diversity of a manner in which the terminal device learns of the data packet that needs to be encapsulated by using the application layer protocol is increased.

In a possible implementation, the method further includes: The terminal device queries configuration information of the terminal device. That the terminal device generates the first data packet includes: When the terminal device finds that the configuration information of the terminal device includes indication information indicating that the transmission of the uplink data of the terminal device is performed via the user plane, the terminal device generates the first data packet.

In the foregoing solution, the terminal device can encapsulate the data packet by using the application layer protocol based on an indication in the configuration information of the terminal device, so that diversity of a manner in which the terminal device learns of the data packet that needs to be encapsulated by using the application layer protocol is increased.

In a possible implementation, the method further includes: The terminal device sends fourth indication information to the access network device, where the fourth indication information indicates that transmission of the first data packet is performed via the user plane.

According to a fourth aspect, a communication method is provided. The method may be performed by a user plane function network element, or may be performed by a component (for example, a chip or a circuit) of the user plane function network element. This is not limited. For ease of description, the following uses an example in which the method is performed by the user plane function network element for description.

The method may include: The user plane function network element receives a first data packet, where the first data packet is data encapsulated by a terminal device by using an application layer protocol, and/or an identifier of a second network element, the terminal device is a device that supports a passive internet of things service, and the second network element is a device that requests to perform an operation on the terminal device; and the user plane function network element sends the first data packet to the second network element.

In the foregoing solution, the user plane function network element receives the data encapsulated by the terminal device by using the application layer protocol, and sends the data packet to the corresponding second network element, so that transmission of the uplink data of the terminal device is performed via a user plane. In this way, the transmission of the uplink data can be performed not via a control plane network element in some specific scenarios, thereby ensuring data privacy.

In a possible implementation, when the first data packet includes the identifier of the second network element, the method further includes: The user plane function network element receives a correspondence between the identifier of the second network element and address information of the second network element from the first network element. That the user plane function network element sends the first data packet to the second network element includes: The user plane function network element determines the address information of the second network element based on the identifier of the second network element and the correspondence between the identifier of the second network element and the address information of the second network element; and the user plane function network element sends the first data packet to the second network element based on the address information of the second network element.

In a possible implementation, that the user plane function network element receives the first data packet includes: The user plane function network element receives a second data packet, where the second data packet is a data packet in which a virtual address of the terminal device or an access network device is added to a packet header of the first data packet and address information of the user plane function network element is added to a destination address.

In a possible implementation, the method further includes: The user plane function network element obtains a correspondence between the virtual address of the terminal device or the access network device and the address information of the second network element. That the user plane function network element sends the first data packet to the second network element includes: The user plane function network element determines the address information of the second network element based on the virtual address of the terminal device or the access network device and the correspondence between the virtual address of the terminal device or the access network device and the address information of the second network element; and the user plane function network element sends the first data packet to the second network element based on the address information of the second network element.

In the foregoing solution, when a plurality of access network devices correspond to a plurality of different second network elements, the user plane function network element can send a data packet to a corresponding second network element based on the identifier of the second network element in the received data packet and the correspondence between the virtual address of the terminal device or the access network device and the address information of the second network element.

In a possible implementation, that the user plane function network element receives the first data packet includes: The user plane function network element receives the second data packet from the access network device, where the second data packet is a data packet in which the identifier of the second network element is added to the packet header of the first data packet; and the user plane function network element obtains the identifier of the second network element and the first data packet based on the second data packet.

According to a fifth aspect, a communication apparatus is provided, including a unit configured to perform the method shown in the first aspect. The communication apparatus may be a first network element, or may be a chip or a circuit disposed in the first network element. This is not limited in this application.

The communication apparatus includes:
a transceiver unit, configured to receive request information from a second network element, where the request information indicates to perform an operation on a terminal device, and the terminal device is a device that supports a passive internet of things service; and a processing unit, configured to obtain first indication information based on the request information, where the processing unit is further configured to determine, based on the first indication information, that transmission of uplink data of the terminal device is performed via a user plane; and the transceiver unit is further configured to send second indication information to an access network device, where the second indication information indicates that the transmission of the uplink data of the terminal device is performed via the user plane, or the second indication information indicates the access network device to determine that the transmission of the uplink data of the terminal device is performed via the user plane.

In a possible implementation, the processing unit is further configured to obtain address information of a user plane function network element from a session management function network element or the user plane function network element; or the processing unit is further configured to obtain address information of a user plane function network element from information stored in the communication apparatus. The transceiver unit is further configured to send the address information of the user plane function network element to the access network device.

In a possible implementation, the transceiver unit is further configured to send third indication information to the access network device, where the third indication information indicates the terminal device to encapsulate the data by using an application layer protocol.

In a possible implementation, the processing unit is further configured to obtain a correspondence between an identifier of the second network element and address information of the second network element from a unified database network element; and the transceiver unit is further configured to send the correspondence between the identifier of the second network element and the address information of the second network element to the user plane function network element.

In a possible implementation, the transceiver unit is further configured to send user plane transmission layer information to the access network device, where the user plane transmission layer information includes a tunnel endpoint identifier and the address information of the user plane function network element.

In a possible implementation, the request information includes the first indication information.

In a possible implementation, the request information includes the identifier of the second network element, and the processing unit is further configured to obtain subscription data of the second network element based on the identifier of the second network element, where the subscription data includes the first indication information.

For explanations of related content and beneficial effect of the communication apparatus provided in the fifth aspect, refer to the method shown in the first aspect. Details are not described herein again.

According to a sixth aspect, a communication apparatus is provided, including a unit configured to perform the method shown in the second aspect. The communication apparatus may be an access network device, or may be a chip or a circuit disposed in the access network device. This is not limited in this application.

The communication apparatus includes:
a transceiver unit, configured to receive second indication information from a first network element, where the second indication information indicates that transmission of uplink data of a terminal device is performed via a user plane, or the second indication information indicates the communication apparatus to determine that the transmission of the uplink data of the terminal device is performed via the user plane; and a processing unit, configured to send third indication information to the terminal device based on the second indication information, where the third indication information indicates the terminal device to encapsulate the data by using an application layer protocol, and the terminal device is a device that supports a passive internet of things service.

In a possible implementation, when the second indication information indicates an access network device to determine that the transmission of the uplink data of the terminal device is performed via the user plane, and when the processing unit is configured to find a user plane transmission instruction in configuration information of the communication apparatus based on the second indication information, the processing unit is further configured to determine that the transmission of the uplink data of the terminal device is performed via the user plane; and the transceiver unit is further configured to send the third indication information to the terminal device.

In a possible implementation, when the access network device does not find the user plane transmission instruction in the configuration information of the communication apparatus based on the second indication information, the processing unit is further configured to determine that the transmission of the uplink data of the terminal device is performed via a control plane.

In a possible implementation, the processing unit is further configured to obtain a correspondence between address information of a user plane function network element and an identifier of a second network element; the transceiver unit is further configured to receive a first data packet from the terminal device, where the first data packet includes the data encapsulated by using the application layer protocol, and/or the identifier of the second network element; the processing unit is further configured to determine the address information of the user plane function network element based on the identifier of the second network element and the correspondence between the address information of the user plane function network element and the identifier of the second network element; and the processing unit is further configured to send the first data packet to the user plane function network element based on the address information of the user plane function network element.

In a possible implementation, the transceiver unit is further configured to receive the correspondence between address information of the user plane function network element and the identifier of the second network element from the first network element; or the processing unit is further configured to obtain the correspondence between address information of the user plane function network element and the identifier of the second network element from the configuration information of the communication apparatus.

In a possible implementation, the processing unit is further configured to obtain the address information of the user plane function network element; the transceiver unit is further configured to receive the first data packet from the terminal device, where the first data packet includes the data encapsulated by using the application layer protocol, and/or the identifier of the second network element; and the processing unit is further configured to send the first data packet to the user plane function network element based on the address information of the user plane function network element.

In a possible implementation, the processing unit is further configured to obtain the correspondence between the address information of the user plane function network element and the identifier of the second network element; and the processing unit is further configured to determine the address information of the user plane function network element based on the identifier of the second network element and the correspondence between the address information of the user plane function network element and the identifier of the second network element.

In a possible implementation, the processing unit is further configured to add a virtual address of the terminal device or the access network device, the identifier of the second network element, and the address information of the user plane function network element to a packet header of the first data packet, to generate a second data packet; and the processing unit is further configured to send the second data packet to the user plane function network element based on the address information of the user plane function network element.

In a possible implementation, the transceiver unit is further configured to receive user plane transmission layer information from the first network element and the identifier of the second network element, where the user plane transmission layer information includes a tunnel endpoint identifier and the address information of the user plane function network element.

In a possible implementation, the processing unit is further configured to add the identifier of the second network element to the packet header of the first data packet, to generate the second data packet; and the processing unit is further configured to send the second data packet to the user plane function network element based on the address information of the user plane function network element.

In a possible implementation, the transceiver unit is further configured to receive the third indication information from the first network element.

In a possible implementation, the processing unit is further configured to generate the third indication information based on the second indication information; and the transceiver unit is further configured to send the third indication information to the terminal device.

In a possible implementation, the transceiver unit is further configured to receive fourth indication information from the terminal device, where the fourth indication information indicates that transmission of the first data packet is performed via the user plane, and the first data packet includes the data encapsulated by using the application layer protocol, and/or the identifier of the second network element.

For explanations of related content and beneficial effect of the communication apparatus provided in the sixth aspect, refer to the method shown in the second aspect. Details are not described herein again.

According to a seventh aspect, a communication apparatus is provided, including a unit configured to perform the method shown in the third aspect. The communication apparatus may be a terminal device, or may be implemented by a chip or a circuit disposed in the terminal device. This is not limited in this application.

The communication apparatus includes:
a processing unit, configured to generate a first data packet, where the first data packet includes data encapsulated by using an application layer protocol, and/or an identifier of a second network element, the communication apparatus is a device that supports a passive internet of things service, and the second network element is a device that requests to perform an operation on the communication apparatus; and a transceiver unit, configured to send the first data packet to an access network device.

In a possible implementation, the transceiver unit is further configured to receive third indication information from the access network device, where the third indication information indicates the communication apparatus to encapsulate the data by using the application layer protocol. The processing unit is further configured to generate the first data packet based on the third indication information.

In a possible implementation, the processing unit is further configured to query configuration information of the communication apparatus; and when the communication apparatus finds that the configuration information of the communication apparatus includes indication information indicating that the transmission of the uplink data of the terminal device is performed via the user plane, the processing unit is configured to generate the first data packet.

In a possible implementation, the transceiver unit is further configured to send fourth indication information to the access network device, where the fourth indication information indicates that transmission of the first data packet is performed via the user plane.

For explanations of related content and beneficial effect of the communication apparatus provided in the seventh aspect, refer to the method shown in the third aspect. Details are not described herein again.

According to an eighth aspect, a communication apparatus is provided, including a unit configured to perform the method shown in the fourth aspect. The communication apparatus may be a user plane function network element, or may be performed by a chip or a circuit disposed in the user plane function network element. This is not limited in this application.

The communication apparatus includes:
a transceiver unit, configured to receive a first data packet, where the first data packet is data encapsulated by a terminal device by using an application layer protocol, and/or an identifier of a second network element, the terminal device is a device that supports a passive internet of things service, and the second network element is a device that requests to perform an operation on the terminal device; and a processing unit, configured to send the first data packet to the second network element.

In a possible implementation, when the first data packet includes the identifier of the second network element, the transceiver unit is further configured to receive a correspondence between the identifier of the second network element and address information of the second network element from the first network element; the processing unit is further configured to determine the address information of the second network element based on the identifier of the second network element and the correspondence between the identifier of the second network element and the address information of the second network element; and the processing unit is further configured to send the first data packet to the second network element based on the address information of the second network element.

In a possible implementation, the transceiver unit is further configured to receive a second data packet, where the second data packet is a data packet in which a virtual address of the terminal device or an access network device is added to a packet header of the first data packet and address information of the user plane function network element is added to a destination address.

In a possible implementation, the processing unit is further configured to obtain a correspondence between the virtual address of the terminal device or the access network device and the address information of the second network element; the processing unit is further configured to determine the address information of the second network element based on the virtual address of the terminal device or the access network device and the correspondence between the virtual address of the terminal device or the access network device and the address information of the second network element; and the processing unit is further configured to send the first data packet to the second network element based on the address information of the second network element.

In a possible implementation, the transceiver unit is further configured to receive a second data packet from the access network device, where the second data packet is a data packet in which the identifier of the second network element is added to a packet header of the first data packet; and the processing unit is further configured to obtain the identifier of the second network element and the first data packet based on the second data packet.

For explanations of related content and beneficial effect of the communication apparatus provided in the eighth aspect, refer to the method shown in the fourth aspect. Details are not described herein again.

According to a ninth aspect, a communication apparatus is provided. The apparatus includes: a memory, configured to store a program; and at least one processor, configured to execute s computer program or instructions stored in the memory, to perform the method in any one of the possible implementations of the first aspect to the fourth aspect.

In an implementation, the apparatus is a first network element.

In another implementation, the apparatus is a chip, a chip system, or a circuit used in the first network element.

According to a tenth aspect, this application provides a processor, configured to perform the methods in the foregoing aspects.

Unless otherwise specified, or if operations, such as sending and obtaining/receiving, related to the processor do not contradict actual functions or internal logic of the operations in related descriptions, the operations may be understood as operations, such as outputting, receiving, and inputting, of the processor, or may be understood as sending and receiving operations performed by a radio frequency circuit and an antenna. This is not limited in this application.

According to an eleventh aspect, a computer-readable storage medium is provided. The computer-readable medium stores program code executed by a device, and the program code includes the method in any one of the possible implementations of the first aspect to the fourth aspect.

According to a twelfth aspect, a computer program product including instructions is provided. When the computer program product runs on a computer, the computer is caused to perform the method in any one of the possible implementations of the first aspect to the fourth aspect.

According to a thirteenth aspect, a chip is provided. The chip includes a processor and a communication interface. The processor reads, through a communication interface, instructions stored in a memory, to perform the method in any one of the possible implementations of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method in any one of the possible implementations of the first aspect to the fourth aspect.

According to a fourteenth aspect, a communication system is provided, including one or more of the foregoing first network element, access network device, terminal device, and user plane function network element.

### BRIEF DESCRIPTION OF DRAWINGS

FIG. 1 is a diagram of a communication system to which this application is applicable;
FIG. 2 is a diagram of a service-based architecture of a 5G system to which this application is applicable;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a block diagram of a communication apparatus 600 according to an embodiment of this application;
FIG. 7 is a block diagram of another communication apparatus 700 according to an embodiment of this application; and
FIG. 8 is a diagram of a chip system 800 according to an embodiment of this application.

### DESCRIPTION OF EMBODIMENTS

The following describes technical solutions of embodiments of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device to device (device to device, D2D) communication, vehicle-to-everything (vehicle-to-everything, V2X) communication, machine to machine (machine to machine, M2M) communication, machine type communication (machine type communication, MTC), an internet of things (internet of things, IoT) communication system, or another communication system.

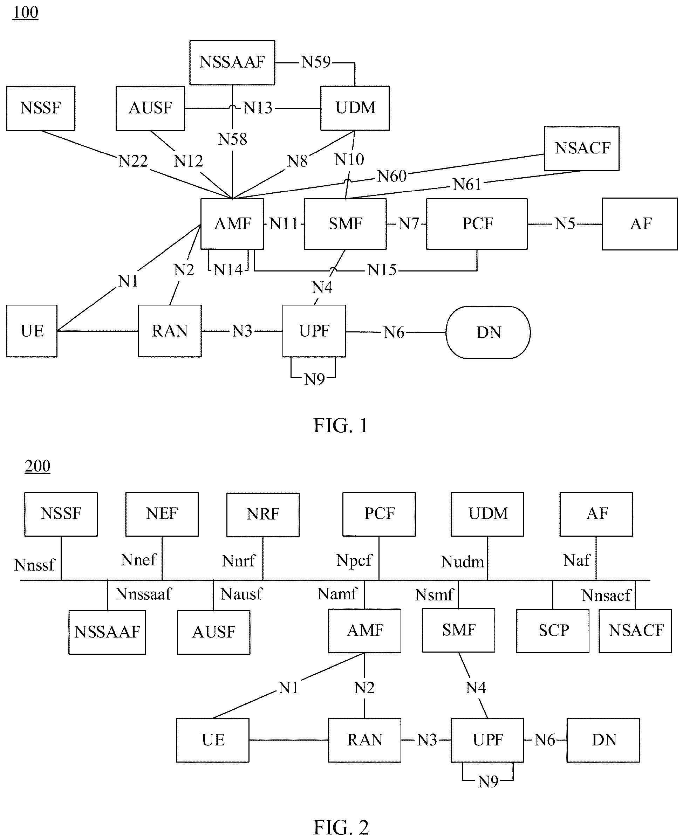

The following describes, with reference to FIG. 1 and FIG. 2, communication systems in different scenarios to which this application is applicable by using examples. It should be understood that a 5G system described in this specification is merely an example, and should not constitute any limitation on this application.

FIG. 1 is a diagram of an architecture of a basic 5G system 100. As shown in FIG. 1, the system 100 includes a policy control function (policy control function, PCF), an AMF, a session management function (session management function, SMF), a radio access network (radio access network, RAN), a unified data management (unified data management, UDM), a data network (data network, DN), a user plane function (user plane function, UPF), UE, an application function (application function, AF), a network slice selection function (network slice selection function, NSSF), an authentication server function (authentication server function, AUSF), and/or the like. Optionally, FIG. 1 may further include the following functions (not shown in FIG. 1): a unified data repository (unified data repository, UDR), a network exposure function (network exposure function, NEF), or a network repository function (NF repository function, NRF).

Main functions of the network elements are described as follows:

### 1. Terminal device

In embodiments of this application, the terminal device may be user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for users, for example, a handheld device or a vehicle-mounted device with a wireless connection function. Currently, some examples of the terminal are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving or autopilot), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs. In addition, in embodiments of this application, the terminal device may alternatively be a terminal device in an internet of things (internet of things, IoT) system.

### 2. Radio access network RAN

The radio access network is an access network that implements an access network function based on a wireless communication technology. The radio access network can manage a radio resource, and provide a radio access service or air interface access service to a terminal, to forward a control signal and user data between the terminal and a core network.

By way of example but not limitation, the radio access network may be an evolved NodeB (evolved NodeB, eNB or eNodeB) in an LTE system, or may be a radio controller in a cloud radio access network (cloud radio access network, CRAN) scenario. Alternatively, the access device may be a relay station, an access point, a vehicle-mounted device, a wearable device, an access device in a 5G network, an access device in a future evolved PLMN network, or the like, or may be an access point (access point, AP) in a WLAN, or may be a gNB in an NR system. This is not limited in embodiments of this application.

### 3. Access and mobility management function network element AMF

The access and mobility management function network element is mainly used for mobility management, access management, and the like, may be configured to implement functions other than session management in a mobility management entity (mobility management entity, MME) function, for example, lawful interception, access authorization (or authentication), and the like, and is further configured to transfer user policies between UE and a PCF. In embodiments of this application, the access and mobility management function network element may be configured to implement functions of an access and mobility management network element.

### 4. Session management function network element SMF

The session management function network element is mainly used for session management, UE allocation and management of an internet protocol (internet protocol, IP) address, selection of a user plane function (user plane function, UPF) network element, termination of interfaces towards policy control and charging functions, downlink data notification, and the like. In embodiments of this application, the session management function network element may be configured to implement functions of a session management network element.

### 5. User plane function network element UPF

The user plane function network element may be used for packet routing and forwarding, QoS parameter handling of user plane data, or the like. User data may be accessed to a data network (data network, DN) via this network element. In embodiments of this application, the user plane function network element may be configured to implement functions of a user plane network element. For example, when a session is established on different UPFs, service experience of UE is also different. Therefore, the SMF needs to select an appropriate UPF for a session of the UE.

### 6. Policy control network element PCF

The policy control network element is a unified policy framework for guiding network behavior, and provides policy rule information and the like for control plane function network elements (for example, an AMF network element and an SMF network element). The policy control network element is mainly responsible for policy control functions such as session and service flow level charging, QoS bandwidth guarantee, mobility management, and UE policy decision making.

### 7. Network exposure function network element NEF

The network exposure function network element is configured to expose, to the outside, service and network capability information (such as a terminal location and whether a session is reachable) provided by a 3GPP network function.

### 8. Application function network element AF

The application function network element is mainly configured to transfer requirements of an application side for a network side, for example, a QoS requirement or a user status event subscription. The AF may be a third-party function entity or an application service deployed by an operator, for example, an IMS voice call service. When interacting with a core network, an application function entity of a third-party application may further perform authorization processing via a NEF. For example, the third-party application function directly sends a request message to the NEF, and the NEF determines whether the AF is allowed to send the request message. If verification succeeds, the NEF forwards the request message to a corresponding PCF or a unified data management UDM.

### 9. Unified data management network element UDM

The unified data management network element is mainly used for unified data management, and supports authentication trust status processing, user identification handling, access authorization, registration and mobility management, subscription management, short message management, and the like in a 3GPP authentication and key agreement mechanism.

### 10. Unified data repository network element UDR

The unified data repository network element is mainly used for storage and retrieval functions of subscription data, policy data, application data, and other types of data.

In the foregoing architecture, functions of all interfaces are described as follows:
N7 is an interface between the PCF and SMF, and is configured to deliver a PDU session granularity and a service data flow granularity control policy.

N15 is an interface between the PCF and the AMF, and is configured to deliver a UE policy and an access control related policy.

N5 is an interface between the AF and the PCF, and is configured to deliver an application service request and report a network event.

N4 is an interface between the SMF and the UPF, and is configured to transfer information between a control plane and a user plane, including delivery of a forwarding rule, a QoS control rule, a traffic statistics rule, and the like from the control plane to the user plane, and reporting of user plane information.

N11 is an interface between the SMF and the AMF, and is configured to transfer PDU session tunnel information between the RAN and the UPF, transfer a control message to be sent to the UE, transfer radio resource control information to be sent to the RAN, and the like.

N2 is an interface between the AMF and the RAN, and is configured to transfer radio bearer control information from a core network side to the RAN, and the like.

N1 is an interface between the AMF and the UE, is access-irrelevant, and is configured to transfer a QoS control rule to the UE, and the like.

N8 is an interface between the AMF and the UDM, and is used by the AMF to obtain subscription data and authentication data related to access and mobility management from the UDM and is used by the AMF to register current mobility management related information of the UE with the UDM.

N10 is an interface between the SMF and the UDM, and is used by the SMF to obtain subscription data related to session management from the UDM and is used by the SMF to register current session related information of the UE with the UDM.

In addition, although not shown in FIG. 1, the UDR may further have direct interfaces to the PCF and the UDM, which are respectively corresponding to an N36 interface and an N35 interface. The N36 interface is used by the PCF to obtain policy-related subscription data and application data-related information from the UDR, and the N35 interface is used by the UDM to obtain user subscription data information from the UDR.

It should be understood that the foregoing network architecture applied to embodiments of this application is merely an example of a network architecture described from a perspective of a conventional point-to-point architecture and a service-based architecture, and a network architecture applicable to embodiments of this application is not limited thereto. Any network architecture that can implement functions of the foregoing network elements is applicable to embodiments of this application.

It should be understood that names of the interfaces between the network elements in FIG. 1 are merely an example, and the interfaces may have other names during specific implementation. This is not specifically limited in this application. In addition, names of messages (or signaling) transmitted between the foregoing network elements are also merely examples, and do not constitute any limitation on functions of the messages.

It should be noted that the foregoing network elements may also be referred to as entities, devices, apparatuses, modules, or the like. This is not particularly limited in this application. In addition, in this application, for ease of understanding and description, a description of a network element is omitted in some descriptions. For example, the SMF network element is referred to as an SMF for short. In this case, "SMF" should be understood as the SMF network element. The following omits descriptions of a same or similar case.

It may be understood that the foregoing network elements or functions may be network elements in a hardware device, software functions running on dedicated hardware, or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

It should be further understood that, in the communication system shown in FIG. 1, the functions of the constituent network elements are merely examples. When the constituent network elements are used in embodiments of this application, not all the functions are necessary.

In addition, names of the network elements (such as the PCF and the AMF) included in FIG. 1 are merely names, and the names do not constitute a limitation on the functions of the network elements. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further noted that communication between the network elements implementing the control plane functions in FIG. 1 is described by using a non-service-oriented interface as an example, but does not constitute a limitation on the protection scope of embodiments of this application. A person skilled in the art may understand that the network elements having the control plane functions in FIG. 1 may alternatively communicate with each other through a service-oriented interface. For example, an external service-oriented interface provided by the AMF may be Namf; a service-oriented interface provided by the SMF may be Nsmf; an external service-oriented interface provided by the UDM may be Nudm; a service-oriented interface provided by the AF may be Naf; and an external service-oriented interface provided by the PCF may be Npcf.

The network element in FIG. 1 is an architecture based on a reference point, and does not constitute a limitation on embodiments of this application. FIG. 2 is a diagram of an architecture based on a service-oriented interface. As shown in FIG. 2, the architecture includes an NSSF, an AUSF, a UDM, a NEF, an NRF, a PCF, an AF, an AMF, an SMF, UE, a RAN, a UPF, a DN, and/or the like. In FIG. 2, an external service-oriented interface provided by the NSSF may be Nnssf, an external service-oriented interface provided by the NEF may be Nnef, an external service-oriented interface provided by the NRF may be Nnrf, an external service-oriented interface provided by the AMF may be Namf, a service-oriented interface provided by the SMF may be Nsmf, an external service-oriented interface provided by the UDM may be Nudm, a service-oriented interface provided by the AF may be Naf, an external service-oriented interface provided by the PCF may be Npcf, an external service-oriented interface provided by the AUSF may be Nausf, an external service-oriented interface provided by a CHF may be Nchf, and an interface between a control plane function and each of the RAN and the UPF is a non-service-oriented interface. The UE is connected to the AMF through an N1 interface, and the UE is connected to the RAN through a radio resource control (radio resource control, RRC) protocol. The RAN is connected to the AMF through an N2 interface, the RAN is connected to the UPF through an N3 interface, the UPF is connected to the DN through an N6 interface, and the UPF is also connected to the SMF through an N4 interface. For related descriptions, refer to a 5G system architecture (5G system architecture) in a standard. For brevity, a connection relationship of the architecture 200 is not described herein.

For ease of understanding of embodiments of this application, terms or technologies in this application are briefly described.

### 1. Passive internet of things (passive internet of things, passive IoT/P-IoT, or ambient power-enabled IoT, ambient IoT/A-IoT)

The passive internet of things, also known as an ambient power-enabled internet of things, is an internet of things technology in which internet of things (internet of things, IoT) network nodes supply energy by obtaining environmental energy, without connecting to external "energy sources." In other words, some network nodes may be passive, which obtain energy from solar energy, light energy, temperature difference, energy generated by vibration, radio frequency, wind energy, hydro energy, tidal energy, or the like. The manner of obtaining energy is not limited. These nodes are not equipped with or do not depend on power supply devices such as batteries, but obtain energy from an ambient environment, to support data sensing, transmission, and distributed computing. A network node in the passive internet of things may also have an energy storage function.

A passive internet of things architecture may include a passive terminal, a reader (reader), and a server. The passive terminal may be in a tag form, or may be in any other terminal form, which is not limited. The reader may be an access network device, for example, a base station, a pole station, a micro base station, or a macro base station. The reader may alternatively be a terminal device. The terminal device includes a handheld device, a vehicle-mounted device, a wearable device, a computing device, or the like that has a wireless communication function. For example, the terminal device may be a mobile phone (mobile phone), a tablet computer, a computer with a wireless transceiver function, an IoT device, a handheld reader, or the like. In addition, the terminal device may be an apparatus that can support the terminal in implementing the function, for example, a chip or a chip system. The apparatus may be installed in the terminal. The reader (reader) performs non-contact bidirectional data communication in a wireless radio frequency manner, and reads or writes an electronic tag (tag) or a radio frequency card in the wireless radio frequency manner, to identify a target and exchange data.

It should be understood that, in this application, an example in which a passive terminal is a tag and a reader is a base station (for example, a radio access network (radio access network, RAN) device) is used for description, but forms of the passive terminal and the reader are not limited thereto.

There are two operating modes for the reader. 1. When a tag enters an effective identification range of the reader, the reader emits RF signal, and the tag receives the radio frequency signal sent by the reader, and uses the induced current to power the transmission of information stored in a chip (corresponding to passive tags). 2. The tag may store some electric energy through solar energy or the like, so that the tag can actively send signals of a specific frequency (these are also known as semi-passive tags or semi-active tags); and the reader receives and decodes information, and sends decoded information to a central information system for related data processing. This technology is widely used in various industries. The following briefly lists two application scenarios of the reader.
(1) Warehouse/Transportation/Materials: Products are embedded with or attached with passive or semi-passive internet of things tags and stored in warehouses and shopping malls, and product-related information is automatically collected by readers during logistics locations. Management personnel can quickly query the product information in a system, reducing the risk of loss or theft, accelerating goods handover with higher accuracy, and preventing cross-shipment and counterfeiting.
(2) Fixed asset management: For places with a large number of assets or valuable items, such as libraries, art museums, and museums, a comprehensive management procedure or strict protective measures is required. When there is any abnormal change in storage information of books or the valuable items, the system can immediately alert administrators to handle the related cases.

### 2. Tag operation

A server (or an AF) may perform different operations on a tag. The following lists several common tag operations.
(1) Inventory operation (which may also be referred to as a counting operation): Inventory an existing tag situation, or may be understood as obtaining identification information of a tag. Specifically, each tag has an identifier. The identifier of the tag may be allocated by an enterprise (that is, written into the tag when the enterprise prints the tag), or may be allocated by an operator. For example, the identifier of the tag may be a globally unique code (for example, an electronic product code (electronic product code, EPC)), or may be a temporary identifier or a non-globally unique identifier.
   In the inventory operation, the server may deliver an inventory instruction (the inventory instruction includes information such as an identifier range of the tag, a reader identifier, and location information). After receiving the inventory instruction, the reader inventories the tag according to the inventory instruction, and sends the identification information of the tag to the server. Alternatively, the server sends an inventory instruction, the reader forwards the inventory instruction to the tag, the tag learns of the inventory operation based on content of the inventory instruction, the tag sends the identification information of the tag to the reader, and the reader sends the identification information of the tag to the server. Alternatively, the tag sends the identification information of the tag to a core network via the reader, and the core network sends the identification information of the tag to the server.
(2) Read operation (read): Read data from a tag. The tag has a storage function, and a storage area of the tag can store data. When a server performs the read operation on the tag, the server sends a read instruction, and a reader or a core network performs the read operation on the tag according to the instruction, reads the data from the storage area of the tag, and sends the data to the server. Reading data may further include reading sensor data (sensor data report).
(3) Write operation (write): Write data into a tag. When a server performs the write operation on the tag, the server sends a write instruction, and a reader or a core network performs the write operation on the tag according to the instruction, and writes data into a storage area of the tag.
(4) Positioning operation (positioning): The positioning operation is an operation of obtaining location information of a tag. The network device may generate a positioning instruction, and perform the positioning operation on the tag according to the positioning instruction, to obtain location information of the tag.
(5) Disable operation (kill): Enable a tag to be invalidated or disabled. When a server performs the disable operation on the tag, the server sends a disable instruction, where the disable instruction includes a tag identifier (for example, an identifier of a tag that is expected to be disabled or invalidated), and a reader or a core network performs an invalidation operation on the tag according to the instruction. After the operation is completed, the tag is invalidated or disabled, and the inventory or another operation cannot be performed on the tag anymore.
(6) Operation of obtaining tag information: The operation of obtaining the tag information may be understood as that the foregoing inventory operation, the foregoing read operation, and the like are included. The operation does not distinguish whether the server inventories the tag or reads tag data. The operation obtains the tag information, where the tag information may be the identification information of the tag or the information stored in the storage area of the tag.
(7) Message interaction operation with a tag: It may be understood as that the foregoing operations are included. After receiving an instruction sent by the server, the reader performs information or message exchange with the tag, and sends information from the tag to the server. This operation is mainly for a scenario in which the reader does not view content of the instruction, and is only responsible for forwarding a message sent by the server to the tag and a message sent by the tag to the server. Therefore, in this scenario, the operation performed by the reader on the tag may be understood as an operation of performing message exchange with the tag.

### 3. Tag protocol stack

A P-IoT tag is designed with a simplified protocol stack. In one design, the tag supports only a control plane protocol stack and does not support a user plane protocol stack. Specifically, a passive terminal is connected to a reader through the control plane protocol stack, where a radio resource controller (radio resource controller, RRC) layer only supports signaling transmission and does not support state management, a packet data convergence protocol (Packet Data Convergence Protocol, PDCP) layer and a radio link control (Radio Link Control, RLC) layer perform transparent transmission of data, and a media access control (Media Access Control, MAC) layer only supports random access and data transmission.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

The foregoing briefly describes the terms in this application, and details are not described in the following embodiments again. The following describes, in detail with reference to the accompanying drawings, a communication method provided in embodiments of this application. Embodiments provided in this application may be applied to the network architecture shown in FIG. 1. This is not limited.

Based on the communication systems in FIG. 1 and FIG. 2, currently, a transmission manner of uplink and downlink data of the passive internet of things is that transmission is performed via a control plane. For example, for an inventory operation, an enterprise sends an instruction to a tag via a core network and a reader. After accessing the reader through random access, the tag performs registration and sends a tag identifier to a core network element. The core network element manages the tag identifier and sends the tag identifier to the enterprise. For another example, for a read/write operation, after receiving a tag identifier, the core network element feeds back a read/write operation instruction to the tag, and after receiving data read by the tag or a write success indication, the core network element feeds back the data to the enterprise. However, in some scenarios, for example, in a scenario of data in a confidentiality regulation or private data, how to select a more appropriate transmission manner to perform transmission of uplink data is a problem that needs to be urgently resolved.

This application provides a communication method. Transmission of uplink data is performed via a user plane, instead of a control plane network element in some specific scenarios, thereby ensuring data privacy.

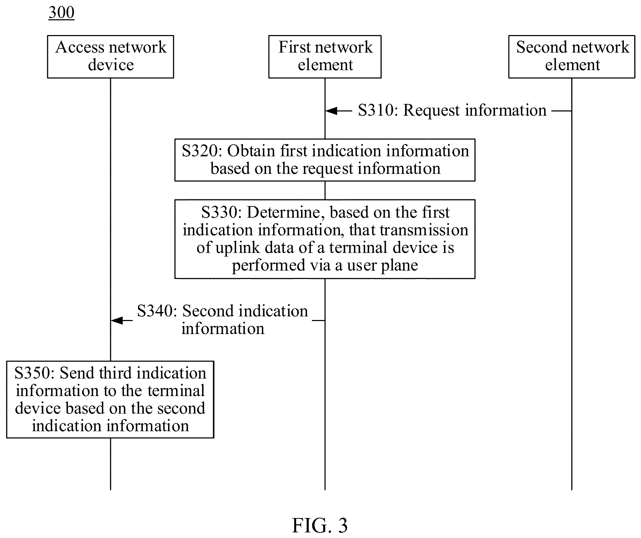

FIG. 3 is a diagram of a communication method 300 according to an embodiment of this application. The method 300 may include the following steps.

S310: A second network element sends request information to a first network element.

Correspondingly, the first network element receives the request information from the second network element.

The request information indicates to perform an operation on the terminal device, and the terminal device is a device that supports a passive internet of things service.

In a possible implementation, the first network element is an AMF, the second network element is an AF, and the terminal device is a tag.

For example, the AF sends the request information to the AMF, to request to perform an operation like inventory, read, or write on the tag.

S320: The first network element obtains first indication information based on the request information.

The first indication information indicates that transmission of uplink data of the terminal device is performed via a user plane.

In a possible implementation, the request information received by the first network element in S310 includes the first indication information.

In a possible implementation, the request information received by the first network element in S310 includes an identifier of the second network element, and the first network element obtains subscription data of the second network element based on the identifier of the second network element, where the subscription data includes the first indication information.

For example, the identifier of the second network element may be an internal identifier, for example, an AF identifier, or may be an external identifier, for example, an enterprise identifier, an IP address, or a port number. This is not limited in this application.

For example, the first network element obtains the subscription data of the second network element from a UDM or a UDR based on the identifier of the second network element, and obtains the first indication information from the subscription data of the second network element. It should be understood that when the identifier of the second network element is the external identifier, the UDM or the UDR needs to convert the internal identifier.

It should be noted that a manner in which the first network element obtains the first indication information based on the request information is merely an example. This is not limited in this application.

S330: The first network element determines, based on the first indication information, that the transmission of the uplink data of the terminal device is performed via the user plane.

Specifically, after obtaining the first indication information, the first network element determines, based on the first indication information, that the transmission of the uplink data of the terminal device is performed via the user plane.

S340: The first network element sends second indication information to an access network device.

Correspondingly, the access network device receives the second indication information from the first network element.

Specifically, after determining that the transmission of the uplink data of the terminal device is performed via the user plane, the first network element sends the second indication information to the access network device. The second indication information indicates that the transmission of the uplink data of the terminal device is performed via the user plane, or the second indication information indicates the access network device to determine that the transmission of the uplink data of the terminal device is performed via the user plane.

Optionally, the second indication information includes a tag mask, and the tag mask indicates a range of the terminal device that has the uplink data whose transmission can be performed via the user plane, so that the tag determines, during random access, whether the tag meets the range of the tag mask. In other words, the tag mask is used for filtering and sifting of a tag for random access. For example, the tag mask may include a user identifier (an identifier of an enterprise) and/or a network identifier (a network to which a user belongs) and/or a tag identifier range. This is not limited in this application.

Optionally, the first network element sends third indication information to the access network device.

It should be understood that when sending the second indication information to the access network device, the first network element may further send the third indication information to the access network device. The third indication information indicates the terminal device to encapsulate the data by using an application layer protocol, to avoid that the access network device senses the data of the terminal device, and ensure privacy of the data of the terminal device.

S350: The access network device sends the third indication information to the terminal device based on the second indication information.

Correspondingly, the terminal device receives the third indication information from the access network device.

The third indication information indicates the terminal device to encapsulate the data by using the application layer protocol.

In a possible implementation, when the second indication information indicates that the transmission of the uplink data of the terminal device is performed via the user plane, the access network device sends the third indication information to the terminal device.

In a possible implementation, when the second indication information indicates the access network device to determine that the transmission of the uplink data of the terminal device is performed via the user plane, if the access network device finds a user plane transmission instruction in configuration information of the access network device based on the second indication information, the access network device determines that the transmission of the uplink data of the terminal device is performed via the user plane, and the access network device sends the third indication information to the terminal device.

In a possible implementation, when the second indication information indicates the access network device to determine that the transmission of the uplink data of the terminal device is performed via the user plane, if the access network device does not find a user plane transmission instruction in configuration information of the access network device based on the second indication information, the access network device determines that the transmission of the uplink data of the terminal device is performed via a control plane. In this case, the access network device does not send the third indication information to the terminal device, in other words, the access network device terminates the data transmission.

In a possible implementation, the access network device constructs or generates the third indication information based on the second indication information received from the first network element, and sends the third indication information to the terminal device.

It should be noted that a manner in which the access network device sends the third indication information to the terminal device based on the second indication information is merely an example. This is not limited in this application.

In the foregoing solution, the transmission of the uplink data of the terminal device is performed via the user plane based on the indication of the first network element, instead of a control plane network element in some specific scenarios, thereby ensuring data privacy.

Optionally, the first network element further needs to notify the access network device of a user plane function network element that receives the uplink data of the terminal device. The method 300 may further include S360 and S361.

S360: The first network element obtains address information of the user plane function network element.

In a possible implementation, the first network element obtains the address information of the user plane function network element from a session management function network element or the user plane function network element.

In a possible implementation, the first network element obtains the address information of the user plane function network element from information stored in the first network element.

It should be understood that the information stored in the first network element may be information configured by an AMF or a TMF, or the like. This is not limited in this application.

It should be noted that a manner in which the first network element obtains the address information of the user plane function network element is merely an example. This is not limited in this application.

S361: The first network element sends the address information of the user plane function network element to the access network device.

Correspondingly, the access network device receives the address information of the user plane function network element from the first network element.

In a possible implementation, when the transmission of the uplink data is performed via an IP layer, the first network element sends the address information of the user plane function network element to the access network device.

In a possible implementation, when the transmission of the uplink data is performed via a GTP-U layer, the first network element sends transmission layer information of the user plane to the access network device, where the transmission layer information of the user plane includes a tunnel endpoint identifier (TE ID) and the address information of the user plane function network element.

Optionally, the address information of the user plane function network element may be an IP address and/or a port number of the user plane function network element. This is not limited in this application.

It should be noted that a manner in which the first network element sends the address information of the user plane function network element to the access network device is merely an example. This is not limited in this application.

Further, after S350, the terminal device encapsulates the data by using the application layer protocol, and sends the encapsulated data to the access network device, to perform the transmission of the uplink data via the user plane. The method 300 may further include S370 to S375.

S370: The terminal device generates a first data packet.

The first data packet includes the data encapsulated by using the application layer protocol, and/or the identifier of the second network element.

Specifically, the terminal device encapsulates the data by using the application layer protocol, generates the first data packet, and includes the identifier of the second network element in the first data packet.

It should be understood that, when generating the first data packet, the terminal device encapsulates the data only by using the application layer protocol, and does not encapsulate the identifier of the second network element by using the application layer protocol.

In a possible implementation, the terminal device encapsulates the data by using the application layer protocol based on the third indication information received from the access network device in S350, to generate the first data packet.

In a possible implementation, the terminal device queries configuration information of the terminal device, and when the terminal device finds that the configuration information of the terminal device includes the indication information indicating that the transmission of the uplink data is performed via the user plane, the terminal device encapsulates the data by using the application layer protocol, to generate the first data packet.

It should be noted that a manner in which the terminal device generates the first data packet is merely an example. This is not limited in this application.

S371: The terminal device sends the first data packet to the access network device.

Correspondingly, the access network device receives the first data packet from the terminal device.

Optionally, the access network device receives fourth indication information from the terminal device, where the fourth indication information indicates that transmission of the first data packet is performed via the user plane.

S372: The access network device obtains address information of a user plane function network element.

In a possible implementation, the access network device receives the address information of the user plane function network element from the first network element.

For example, in S361, the access network device receives the address information of the user plane function network element from the first network element.

In a possible implementation, the access network device determines the address information of the user plane function network element based on the identifier of the second network element and a correspondence between the address information of the user plane function network element and the identifier of the second network element.

For example, the access network device receives the correspondence between the address information of the user plane function network element from the first network element and the identifier of the second network element; or the access network device obtains the correspondence between the address information of the user plane function network element and the identifier of the second network element from the configuration information of the access network device, and the access network device determines the address information of the user plane function network element based on the identifier of the second network element in the first data packet and the obtained correspondence. It should be understood that a manner in which the access network device obtains the correspondence between the address information of the user plane function network element and the identifier of the second network element is not limited in this application.

It should be noted that a manner in which the access network device obtains the address information of the user plane function network element is merely an example. This is not limited in this application.

S373: The access network device sends the first data packet to the user plane function network element based on the address information of the user plane function network element.

Correspondingly, the user plane function network element receives the first data packet from the access network device.

In a possible implementation, the access network device directly sends the first data packet to the user plane function network element based on the address information of the user plane function network element.

In a possible implementation, when the first data packet includes the identifier of the second network element, the access network device adds the identifier of the second network element to a packet header of the first data packet, to generate a second data packet, and sends the second data packet to the user plane function network element based on the address information of the user plane function network element. The user plane function network element obtains the identifier of the second network element and the first data packet based on the second data packet.

In a possible implementation, the access network device adds a virtual IP address of the terminal device or the access network device to a source address of the packet header of the first data packet, adds an address of the user plane function network element to a destination address, generates the second data packet, and sends the second data packet to the user plane function network element based on the address information of the user plane function network element. The user plane function network element obtains the identifier of the second network element and the first data packet based on the second data packet.

For example, when different access network devices correspond to different second network elements, the access network device may obtain the virtual IP address of the terminal device or the access network device from an operation request of the second network element or allocated by a UDM. The access network device adds the virtual IP address of the terminal device or the access network device to the source address of the packet header of the first data packet, and adds an IP address of a UPF to the destination address, to generate the second data packet, and send the second data packet to the user plane function network element.

It should be noted that a manner in which the access network device sends the first data packet to the user plane function network element based on the address information of the user plane function network element is merely an example. This is not limited in this application.

S374: The user plane function network element sends the first data packet to the second network element.

Correspondingly, the second network element receives the first data packet from the user plane function network element.

In a possible implementation, the user plane function network element directly sends the first data packet to the second network element.

In a possible implementation, the user plane function network element determines address information of the second network element based on the identifier of the second network element and a correspondence between the identifier of the second network element and the address information of the second network element, and sends the first data packet to the second network element based on the address information of the second network element.

For example, the first network element obtains the correspondence between the identifier of the second network element and the address information of the second network element from a unified database network element, and sends the correspondence between the identifier of the second network element and the address information of the second network element to the user plane function network element. The user plane function network element parses the second data packet to obtain the first data packet and the identifier of the second network element, determines the address information of the second network element based on the identifier of the second network element and the obtained correspondence, and sends the first data packet to the second network element.

In a possible implementation, the user plane function network element determines the address information of the second network element based on the virtual IP address of the terminal device or the access network device and a correspondence between the virtual IP address of the terminal device or the access network device and the address information of the second network element, and sends the first data packet to the second network element based on the address information of the second network element.

For example, the user plane function network element obtains the correspondence between the virtual IP address of the terminal device or the access network device and the address information of the second network element through local configuration or through sending by the AMF via the SMF. The user plane function network element parses the second data packet to obtain the first data packet, determines the address information of the second network element based on the virtual IP address of the terminal device or the access network device in the source address of the first data packet header and the obtained correspondence, and sends the first data packet to the second network element.

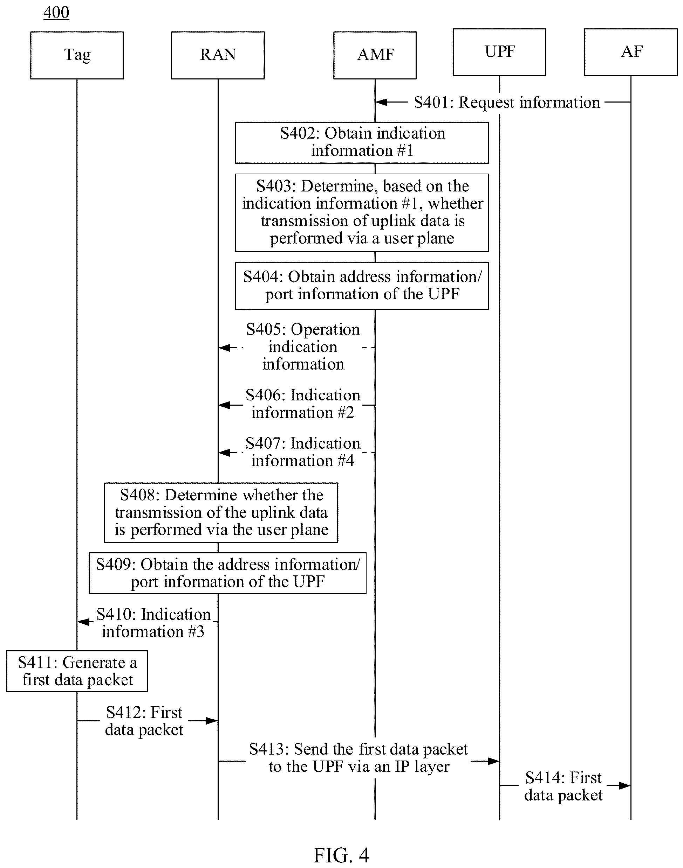

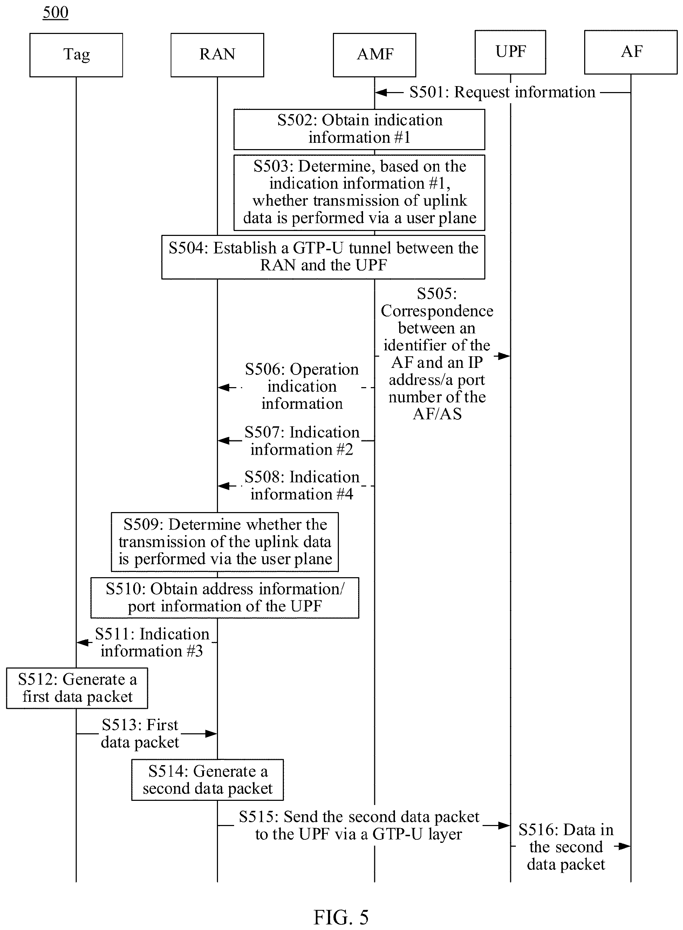

It should be noted that the manner in which the user plane function network element sends the first data packet to the second network element is merely an example. This is not limited in this application. Based on the foregoing descriptions of FIG. 3, the following describes the communication method 300 provided in FIG. 3 by using an example in which a first network element is an AMF, a second network element is an AF, and a terminal device is a tag with reference to FIG. 4 and FIG. 5.

FIG. 4 is a diagram of a communication method 400 according to an embodiment of this application. The method 400 may include the following steps.

S401: An AF sends request information to an AMF.

Correspondingly, the AMF receives the request information from the AF.

The request information is used to request to obtain tag information, and the request information is used to request to obtain the tag information.

Optionally, the request information further includes at least one of the following:
AF/AS slice information, an address and a port number of the AS/AF, an operation instruction, an operation tag identifier, a geographical location of a to-be-operated tag, identification information that can identify the AF, and a tag mask.

The AF/AS slice information is used to select an SMF and a UPF. For example, the AF/AS slice information is single network slice selection assistance information (single network slice selection assistance information, S-NSSAI).

The address and the port number of the AS/AF are used to determine an IP address of an uplink data packet.

The operation instruction may include an inventory operation instruction, a read/write operation instruction, a disable operation instruction, a positioning operation instruction, and the like. This is not limited in this application. The inventory operation instruction indicates that the AF expects to perform the inventory operation on the tag, the read/write operation instruction indicates that the AF expects to perform a read/write operation on the tag, the disable operation instruction indicates that the AF expects to perform an invalidation operation on the tag, and the positioning operation instruction indicates that the AF expects to perform an operation of obtaining location information on the tag.

The operation tag identifier indicates a tag on which an operation needs to be performed. Optionally, the operation tag identifier includes an identifier of the AF.

The geographical location of the to-be-operated tag indicates a location of the tag on which the operation needs to be performed.

The identification information that can identify the AF is used for an identifier of the AF that sends the request information.

The tag mask indicates a range of a terminal device that has the uplink data whose transmission can be performed via a user plane. For example, the tag mask may include a user identifier (an identifier of an enterprise) and/or a network identifier (a network to which a user belongs) and/or a tag identifier range. This is not limited in this application.

It should be noted that in this application, the AMF may be alternatively replaced with a tag management function (tag management function, TMF), that is, the TMF can perform a corresponding operation of the AMF in this application. For ease of description, in this application, the AMF is used as an example for description. For an operation of the TMF, refer to the corresponding operation of the AMF.

S402: The AMF obtains indication information #1.

The indication information #1 indicates that transmission of the uplink data needs to be performed via the user plane, or the indication information #1 indicates that transmission of the uplink data is performed via a control plane or via the user plane.

For example, when the indication information #1 is "1", the indication information #1 indicates that the transmission of the uplink data is performed via the user plane; or when the indication information #1 is "0", the indication information #1 indicates that the transmission of the uplink data is performed via the control plane.

It should be understood that when the indication information #1 indicates that the transmission of the uplink data needs to be performed via the user plane, or the indication information #1 indicates that the transmission of the uplink data is performed via the user plane, the indication information #1 is the first indication information in the method 300.

It should be understood that, that the data does not go out of a campus may be understood as that the data in the campus does not go through a public network (for example, a core network control plane network element), but goes through a device in the campus (for example, a UPF and a RAN deployed in the campus).

In a possible implementation, the request information received by the AMF from the AF in S401 includes the indication information #1.

In a possible implementation, the AMF obtains subscription data or policy information of the AF, where the subscription data or the policy information includes the indication information #1.

Specifically, the AMF obtains subscription information or policy data from a service layer, where the subscription information or the policy data includes the indication information #1.

It should be understood that, that the AMF obtains the subscription information or the policy data from the service layer may be understood that the AMF provides, from the service layer, a key for obtaining the subscription information or the policy data.

Optionally, the request information includes a tag identifier, and the AMF obtains, based on the tag identifier, the subscription data or the policy information of the AF corresponding to the tag.

For example, if the tag identifier is an enterprise identifier, the AMF indexes a port number of the UPF/the indication information #1/the slice information in the subscription data based on the enterprise identifier.

For example, if the tag identifier is the identifier of the AF, the AMF indexes the port number of the UPF/service indication information/the slice information corresponding to the AF based on the identifier of the AF.

Optionally, the subscription information or the policy data may further include address information/port information of the UPF and the AF/AS slice information.

The address information/port information of the UPF is used by the RAN for transmission of the uplink data.

For example, the address information of the UPF is an IP address of the UPF, and the port information of the UPF is the port number of the UPF.

In a possible implementation, the AMF preconfigures a correspondence between the indication information #1, the identifier of the AF/AS, and the corresponding address information/port information of the UPF.

Optionally, the AMF may further preconfigure the slice information.

It should be noted that a manner in which the AMF obtains the indication information #1 is merely an example. This is not limited in this application.

S403: The AMF determines, based on the indication information #1, whether the transmission of the uplink data is performed via the user plane.

Specifically, after obtaining the indication information #1, the AMF determines, based on the indication information #1, whether the transmission of the uplink data is performed via the user plane.

It should be understood that, in this application, the uplink data may be understood as uplink data of the terminal device (uplink data of the tag). For ease of description, the uplink data of the terminal device is referred to as the uplink data for short below.

In a possible implementation, when the indication information #1 indicates that the transmission of the uplink data needs to be performed via the user plane, the AMF determines that the transmission of the uplink data is performed via the user plane.

In a possible implementation, when the indication information #1 is "1", that is, the indication information #1 indicates that the transmission of the uplink data is performed via the user plane, the AMF determines that the transmission of the uplink data is performed via the user plane. When the indication information #1 is "0", that is, the indication information #1 indicates that the transmission of the uplink data is performed via the control plane, and the AMF determines that the transmission of the uplink data is performed not via the user plane, that is, the transmission of the uplink data is performed via the control plane.

It should be noted that a manner in which the AMF determines, based on the indication information #1, whether the transmission of the uplink data is performed via the user plane is merely an example. This is not limited in this application.

It should be noted that when the AMF determines that the transmission of the uplink data is performed via the control plane, for a specific process of performing the transmission of the uplink data via the control plane, refer to related descriptions in a conventional technology. This is not limited in this application.

Further, when the AMF determines that the transmission of the uplink data is performed via the user plane, the method 400 may further include the following steps.

S404: The AMF obtains the address information/port information of the UPF.

In a possible implementation, the SMF determines the AMF and the UPF based on the AF/AS slice information in S401 (for example, the SMF selects the UPF based on the S-NSSAI corresponding to the AF), sends address information/the port number of the AS to the UPF, and sends, to the AMF/TMF, the address information/port information of the UPF selected by the SMF.

In a possible implementation, the AMF determines the AMF and the UPF based on the AF/AS slice information in S401, and sends a UPF information request to the SMF, where the UPF information request carries the address information/the port number of the AS and a UPF IP address request. The SMF forwards the UPF information request to the UPF. After receiving the UPF information request, the UPF feeds back the address information/port information of the UPF to the AMF.

In a possible implementation, in S402, when the AMF preconfigures the correspondence between the identifier of the AF/AS and the corresponding UPF address information/port information, the AMF can obtain the address information/port information of the UPF based on the identifier of the AF/AS and the correspondence. It should be noted that, in this case, the UPF may alternatively obtain the IP address/the port number of the AF/AS based on the preconfigured correspondence between the identifier of the AF/AS and the corresponding address information/port information of the UPF.

It should be noted that a manner in which the AMF obtains the address information/port information of the UPF is merely an example. This is not limited in this application.

It should be noted that a sequence of S403 and S404 is not limited in this application. For example, S403 may be performed before S404; or S404 may be performed before S403; or S403 and S404 may be performed simultaneously.

Optionally, in S405, the AMF sends operation indication information to the RAN.

Correspondingly, the RAN receives the operation indication information from the AMF.

The operation indication information indicates the tag to start to access the RAN through random access, or the operation indication information indicates the RAN to process the tag in a batch operation manner.

Further, after the AMF determines, based on the indication information #1 in S403, that the transmission of the uplink data is performed via the user plane, the RAN determines, based on the indication of the AMF, whether the transmission of the uplink data is performed via the user plane. The method 400 may further include the following steps.

S406: The AMF sends indication information #2 to the RAN.

Correspondingly, the RAN receives the indication information #2 from the AMF.

For example, the AMF sends the indication information #2 to the RAN via an N2 message.

In a possible implementation, the indication information #2 indicates that the transmission of the uplink data of the tag is performed via the user plane.

Specifically, after receiving the tag information, the RAN performs the transmission of the uplink data of the tag via the user plane. In this case, the indication information #2 may be the second indication information in the method 300.

In a possible implementation, the indication information #2 indicates the RAN to determine whether the transmission of the uplink data of the tag is performed via the user plane.

Specifically, the indication information #2 indicates the RAN to query for a user plane transmission instruction in local configuration information, to determine whether the transmission of the uplink data of the tag is performed via the user plane.

It should be understood that the RAN queries for the user plane transmission instruction in the local configuration information as follows: When the RAN finds that the local configuration information includes the user plane transmission instruction, the RAN determines to perform the transmission of the uplink data of the tag via the user plane. In this case, the indication information #2 may be the second indication information in the method 300; or when the RAN finds that the local configuration information does not include the user plane transmission instruction, the RAN determines to perform the transmission of the uplink data of the tag via the control plane; or when the RAN finds that the local configuration information does not include the user plane transmission instruction, the RAN terminates the data transmission.

Optionally, the AMF may further send the address information/port information of the UPF and/or the tag mask to the RAN via the N2 message.

The tag mask includes one or more of the following information: a range including the tag identifier, the identifier of the AF, and a network identifier.

It should be understood that the range of the tag identifier may be a binary including a range of the to-be-operated tag identifier. For example, when an operation needs to be performed on a tag #1 to a tag #3, a mask constructed by the AMF is 00XX, and the tag accesses the RAN through random access within a mask range. Another form is to perform an encryption operation on the tag identifier, for example, perform AND, OR, and NOT calculation. A core network/the AF/the tag has a decryption rule, and a base station broadcasts the encrypted tag identifier, and decrypts the tag after receiving the tag.

Optionally, in S407, the AMF sends indication information #4 to the RAN.

Correspondingly, the RAN receives the indication information #4 from the AMF.

For example, the AMF sends the indication information #4 to the RAN via the N2 message.

The indication information #4 indicates that the transmission of the uplink data is performed via the control plane.

S408: The RAN determines whether the transmission of the uplink data is performed via the user plane.

In a possible implementation, the RAN determines, based on the indication information #2, whether the transmission of the uplink data is performed via the user plane.

For example, when the RAN receives the indication information #2 in S406, and the indication information #2 indicates that the transmission of the uplink data of the tag is performed via the user plane, the RAN determines that the transmission of the uplink data is performed via the user plane.

For example, when the RAN receives the indication information #2 in S406, and the indication information #2 indicates the RAN to query for the user plane transmission instruction in the local configuration information, and when the RAN finds that the local configuration information includes the user plane transmission instruction, the RAN determines that the transmission of the uplink data is performed via the user plane; or when the RAN finds that the local configuration information does not include the user plane transmission instruction, transmission of uplink data of the RAN is performed via the control plane.

In a possible implementation, the RAN determines, based on the indication information #4, whether the transmission of the uplink data is performed via the user plane.

Specifically, when the RAN receives the indication information #4 in S407, the RAN determines that the transmission of the uplink data is performed via the control plane.

In a possible implementation, when the RAN does not receive the indication information #2 and the indication information #4, the RAN determines that the transmission of the uplink data is performed via the control plane.

In a possible implementation, the RAN determines, based on the local configuration information, whether the transmission of the uplink data is performed via the user plane.

For example, when the RAN is a dedicated base station deployed in the campus, local configuration information of the RAN may be that transmission of only uplink user plane information can be performed. Further, the RAN determines, based on the local configuration information, whether the transmission of the uplink data is performed via the user plane.

It should be noted that a manner in which the RAN determines whether the transmission of the uplink data is performed via the user plane is merely an example. This is not limited in this application.

It should be noted that after the RAN determines that the transmission of the uplink data is performed via the control plane, the RAN determines, based on the local configuration information, that the transmission of the uplink data is performed via the user plane, and determines the address information/port information of the UPF. The RAN feeds back the local configuration information to the AMF. After receiving the local configuration information of the RAN, the AMF terminates this operation, that is, the RAN does not perform another operation subsequently.

S409: The RAN obtains the address information/port information of the UPF.

In a possible implementation, when receiving the indication information #2 from the AMF, the RAN receives the address information/port information of the UPF from the AMF.

In a possible implementation, the RAN obtains the address information/port information of the UPF by querying the local configuration information.

Specifically, the RAN obtains the address information/port information of the UPF based on the obtained identifier of the AF and the locally configured correspondence between the identifier of the AF/AS and the corresponding address information/port information of the UPF.

Further, when the RAN determines that the transmission of the uplink data is performed via the user plane in S408, the RAN indicates the tag to encapsulate the data by using an application layer protocol. The method 400 may further include the following steps.

S410: The RAN sends indication information #3 to the tag.

Correspondingly, the tag receives the indication information #3 from the RAN.

The indication information #3 indicates a tag for random access to perform the transmission of the uplink data in an RRC manner and encapsulate the data by using the application layer protocol.

It should be understood that the indication information #3 may be the third indication information in the method 300.

In a possible implementation, in a process in which the tag accesses the RAN through random access, the RAN includes the indication information #3 in a broadcast select or query command.

It should be understood that the indication information #3 may be determined by the RAN after the RAN determines that the transmission of the uplink data is performed via the user plane. Alternatively, the indication information #3 may be determined by the AMF and sent to the RAN. This is not limited in this application.

It should be noted that, for the process in which the tag accesses the RAN through random access, refer to a specific random access process in the conventional technology. This is not limited in this application.

S411: The tag generates a first data packet.

For example, the data may be the tag identifier.

In a possible implementation, after receiving the indication information #3, the tag encapsulates the data by using the application layer protocol based on the indication information #3, to generate the first data packet.

In a possible implementation, the tag determines, based on the local configuration information, to encapsulate the data by using the application layer protocol, and generates the first data packet.

The local configuration information of the tag indicates that the tag is a device that does not go out of the campus, and the transmission of the uplink data of the tag is performed only via the user plane.

S412: The tag sends the first data packet to the RAN.

Correspondingly, the RAN receives the first data packet from the tag.

For example, the tag sends the first data packet to the RAN via RRC signaling.

In a possible implementation, if the local configuration information of the tag indicates that the tag is a device that does not go out of the campus, and the transmission of the uplink data of the tag is performed only via the user plane, the tag sends the indication information #2 to the RAN, where the indication information #2 indicates that the transmission of the uplink data is performed via the user plane.

It should be understood that the RAN needs to parse the indication information #2, but the RAN does not have an application layer protocol stack. Therefore, when the tag sends the indication information #2 to the RAN, the indication information #2 is not encapsulated by using the application layer protocol.

It should be noted that the tag may include the first data packet in the indication information #2 and send the indication information #2 to the RAN, or the tag may send both the indication information #2 and the first data packet to the RAN. This is not limited in this application.

It should be noted that, in S401, when the operation instruction included in the request information received by the AMF from the AF is the read/write operation instruction, the AMF may include, in the N2 message sent to the RAN in S405, data that needs to be read/written. Alternatively, after the AMF sends the operation indication information to the RAN in S405, the AMF sends a NAS message to the RAN, where the NAS message includes data that needs to be read/written. Alternatively, the AMF sends a NAS message to the RAN when the AMF sends the operation indication information to the RAN in S405, where the NAS message includes data that needs to be read/written. For example, the operation indication information and the NAS message are encapsulated together in the N2 message and sent to the RAN. Further, in the process in which the tag accesses the RAN through random access, the RAN may include, in a broadcast select or query command, the data that needs to be read/written. Alternatively, after the tag successfully accesses the RAN through random access, the RAN sends, to the tag via the NAS message, the data that needs to be read/written. After completing the corresponding read/write operation, the tag includes the read data or a write success indication in the RRC message sent by the tag to the RAN in S412, and sends the RRC message to the RAN.

S413: The RAN sends the first data packet to the UPF via an IP layer.

Correspondingly, the UPF receives the first data packet sent by the RAN via the IP layer.

Specifically, the RAN sends, to the UPF via the IP layer based on the address information/port information of the UPF obtained in S409, the uplink data received from the tag.

S414: The UPF sends the first data packet to the AF.

Correspondingly, the AF receives the first data packet sent by the UPF.

In a possible implementation, after receiving the first data packet, the UPF replaces a destination address of the first data packet with the IP address/port number of the AF/AS, and forwards the first data packet to the AF/AS.

It should be noted that, for a specific manner in which the UPF sends the first data packet to the AF in S414, refer to related descriptions of sending, by the user plane function network element, the first data packet to the second network element in S374. For example, the UPF may directly send the first data packet to the AF. For another example, the UPF determines the address information of the AF based on the identifier of the AF and a correspondence between the identifier of the AF and the address information of the AF, and sends the first data packet to the AF based on the address information of the AF. For another example, the UPF determines the address information of the AF based on a virtual IP address of the tag or the RAN and a correspondence between the virtual IP address of the tag or the RAN and the address information of the AF, and sends the first data packet to the AF based on the address information of the AF; and so on. A specific manner in which the UPF sends the first data packet to the AF is not limited in this application.

In the foregoing solution, the AMF and the RAN determine that the transmission of the uplink data is performed via the IP layer of the user plane or via the control plane, so that the transmission of the uplink data can be performed not via the control plane network element in some specific scenarios, thereby ensuring data privacy.

In the method 400 shown in FIG. 4, the transmission of the uplink data is performed via the IP layer of the user plane. If different QoS requirements are to be constructed based on different services, the transmission of the uplink data may also be performed via a GTP-U layer of the user plane, to guarantee QoS of the data. With reference to FIG. 5, the following describes in detail a process of performing the transmission of the uplink data via the GTP-U layer of the user plane.

FIG. 5 is a diagram of a communication method 500 according to an embodiment of this application. The method 500 may include the following steps.

S501: An AF sends request information to an AMF.

Correspondingly, the AMF receives the request information from the AF.

The request information is used to request to obtain tag information, and the request information is used to request to obtain the tag information.

It should be noted that, for a process in which the AF sends the request information to the AMF in S501, refer to related descriptions in S401. To avoid repetition, detailed descriptions thereof are omitted herein.

S502: The AMF obtains indication information #1.

In a possible implementation, the request information received by the AMF from the AF in S501 includes the indication information #1.

In a possible implementation, the AMF obtains subscription data or policy information of the AF, where the subscription data or the policy information includes the indication information #1.

It should be noted that, for a process in which the AMF obtains the indication information #1 in S502, refer to related descriptions in S402. To avoid repetition, detailed descriptions thereof are omitted herein.

S503: The AMF determines, based on the indication information #1, whether transmission of uplink data is performed via a user plane.

Specifically, after obtaining the indication information #1, the AMF determines, based on the indication information #1, whether the transmission of the uplink data is performed via the user plane.

It should be noted that, for a process in which the AMF determines, based on the indication information #1, whether the transmission of the uplink data is performed via the user plane in S503, refer to related descriptions in S403. To avoid repetition, detailed descriptions thereof are omitted herein.

Further, after determining that the transmission of the uplink data is performed via the user plane, the AMF triggers establishment of an N3 tunnel (a GTP-U tunnel) between a RAN and a UPF. The method 500 may further include S504.

S504: Establish the GTP-U tunnel between the RAN and the UPF.

It should be understood that, after the AMF determines that the transmission of the uplink data is performed via the user plane, the SMF establishes the GTP-U tunnel between the RAN and the UPF; or before the AF sends the request information to the AMF in S501, the AF sends indication information to the AMF, to trigger the establishment of the GTP-U tunnel between the RAN and the UPF.

It should be understood that, after the GTP-U tunnel is successfully established, the RAN learns of a tunnel endpoint identifier (tunnel endpoint identifier, TEID) and IP information. The IP information includes an IP address of the UPF or an IP address of a transmission layer. S505: The AMF sends a correspondence between an identifier of the AF and an IP address/a port number of the AF/AS to the UPF.

Correspondingly, the UPF receives the correspondence between the identifier of the AF and the IP address/port number of the AF/AS from the AMF.

It should be understood that the correspondence is used by the UPF to obtain the IP address/port number of the AF/AS based on the identifier of the AF when subsequently forwarding a data packet.

In a possible implementation, the request information sent by the AF to the AMF in S501 carries the identifier of the AF and the IP address/port number, and the AMF obtains the identifier of the AF and the IP address/port number from the request information.

Optionally, in S506, the AMF sends operation indication information to the RAN.

Correspondingly, the RAN receives the operation indication information from the AMF.

The operation indication information indicates the tag to start to access the RAN through random access, or the operation indication information indicates the RAN to process the tag in a batch operation manner.

For example, the AMF sends the operation indication information to the RAN via an N2 message.

S507: The AMF sends indication information #2 to the RAN.

Correspondingly, the RAN receives the indication information #2 from the AMF.

For example, the AMF sends the indication information #2 to the RAN via the N2 message.

The N2 message further includes the identifier of the AF, and the identifier of the AF includes the TE ID and the IP information.

It should be understood that when the N2 message received by the RAN from the AMF carries the identifier of the AF, the transmission of the uplink data of the tag obtained by the RAN needs to be performed via the GTP-U layer of the user plane.

It should be noted that, for the indication information #2 in S507, refer to related descriptions in S406. To avoid repetition, detailed descriptions thereof are omitted herein.

Optionally, in S508, the AMF sends indication information #4 to the RAN.

Correspondingly, the RAN receives the indication information #4 from the AMF.

For example, the AMF sends the indication information #4 to the RAN via the N2 message.

The indication information #4 indicates that the transmission of the uplink data is performed via a control plane.

S509: The RAN determines whether the transmission of the uplink data is performed via the user plane.

It should be noted that, for a manner in which the RAN determines whether the transmission of the uplink data is performed via the user plane in S509, refer to related descriptions in S408. To avoid repetition, detailed descriptions thereof are omitted herein.

S510: The RAN obtains address information/port information of the UPF.

In a possible implementation, when receiving the indication information #2 from the AMF, the RAN receives the address information/port information of the UPF from the AMF.

In a possible implementation, the RAN obtains the address information/port information of the UPF by querying local configuration information.

Specifically, the RAN obtains the address information/port information of the UPF based on the obtained identifier of the AF and a locally configured correspondence between the identifier of the AF/AS and the corresponding address information/port information of the UPF.

Further, when the RAN determines that the transmission of the uplink data is performed via the user plane in S509, the RAN indicates the tag to encapsulate the data by using an application layer protocol. The method 500 may further include the following steps.

S511: The RAN sends indication information #3 to the tag.

Correspondingly, the tag receives the indication information #3 from the RAN.

The indication information #3 indicates a tag for random access to perform the transmission of the uplink data in an RRC manner and encapsulate the data by using the application layer protocol.

It should be noted that, for a manner in which the RAN sends the indication information #3 to the tag in S511, refer to related descriptions in S410. To avoid repetition, detailed descriptions thereof are omitted herein.

S512: The tag generates a first data packet.

For example, the data may be a tag identifier.

In a possible implementation, after receiving the indication information #3, the tag encapsulates the data by using the application layer protocol based on the indication information #3, to generate the first data packet.

In a possible implementation, the tag determines, based on the local configuration information, to encapsulate the data by using the application layer protocol, and generates the first data packet.

The local configuration information of the tag indicates that the tag is a device that does not go out of a campus, and the transmission of the uplink data of the tag is performed only via the user plane.

S513: The tag sends the first data packet to the RAN.

Correspondingly, the RAN receives the first data packet from the tag.

For example, the tag sends the first data packet to the RAN via RRC signaling.

It should be noted that, for a manner in which the tag sends the first data packet to the RAN in S513, refer to related descriptions in S412. To avoid repetition, detailed descriptions thereof are omitted herein.

S514: The RAN generates a second data packet.

In a possible implementation, after receiving the first data packet from the tag, the RAN adds, to a packet header of the first data packet, the identifier of the AF obtained by the RAN in S507, to construct a GTP-U data packet (the second data packet). In other words, the RAN generates the second data packet, where the second data packet includes the first data packet and the identifier of the AF.

In a possible implementation, after receiving the first data packet from the tag, the RAN adds a virtual IP address of the tag or the RAN to a source address of the packet header of the first data packet, and adds the address of the UPF to a destination address, to construct the GTP-U data packet (the second data packet).

S515: The RAN sends the second data packet to the UPF via the GTP-U layer.

Correspondingly, the UPF receives the second data packet sent by the RAN via the GTP-U layer.

In a possible implementation, the RAN sends the second data packet to the UPF via the GTP-U layer based on information about the GTP-U tunnel (the TEID and the IP address) obtained in S510.

S516: The UPF sends data in the second data packet to the AF.

Correspondingly, the AF receives the data sent by the UPF.

In a possible implementation, after the UPF receives the second data packet, the UPF determines the IP address/port number corresponding to the AF based on the identifier of the AF in the second data packet and the correspondence between the identifier of the AF and the IP address/port number of the AF/AS obtained by the UPF in S505, and sends the data in the second data packet to the AF.

For example, the UPF reads the identifier of the AF in a packet header of the second data packet, determines the IP address/port number corresponding to the AF based on the identifier of the AF and the correspondence between the identifier of the AF and the IP address/port number of the AF/AS obtained in S505, fills the address in a destination address of the IP layer, and sends the data in the second data packet to the AF.

In a possible implementation, after the UPF receives the second data packet, the UPF determines the IP address/port number of the AF based on the virtual IP address of the tag or the RAN in the second data packet and a correspondence between the tag or the virtual IP address of the RAN and address information of the AF obtained by the UPF, and sends the data in the second data packet to the AF.

For example, the UPF obtains the correspondence between the virtual IP address of the tag or the RAN and the address information of the AF through local configuration or through sending by the AMF via the SMF. The UPF reads the virtual IP address of the tag or the RAN in a source address of the packet header of the second data packet, determines the IP address/port number corresponding to the AF based on the obtained correspondence, fills the address in the destination address of the IP layer, and sends the data in the second data packet to the AF.

It should be noted that the manner in which the UPF sends the second data packet to the AF is merely an example. This is not limited in this application.

In the foregoing solution, the AMF and the RAN determine that the transmission of the uplink data is performed via the GTP-U layer of the user plane or via the control plane, so that the transmission of the uplink data can be performed not via the control plane network element in some specific scenarios, thereby ensuring data privacy.

It should be understood that the examples in FIG. 3 and FIG. 5 in embodiments of this application are merely intended to help a person skilled in the art understand embodiments of this application, but are not intended to limit embodiments of this application to specific scenarios in the examples. It is apparent that a person skilled in the art can make various equivalent modifications or changes based on the examples shown in FIG. 3 to FIG. 5, and such modifications or changes also fall within the scope of embodiments of this application.

It may be further understood that some optional features in embodiments of this application may be independent of other features in some scenarios, or may be combined with other features in some scenarios. This is not limited.

It may be further understood that, the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names, such as the request information or the first indication information, in embodiments of this application are not intended to limit the protection scope of embodiments of this application.

It may be further understood that the methods and operations implemented by the first network element in the foregoing method embodiments may alternatively be implemented by a component (for example, a chip or a circuit) of the first network element. The methods and operations implemented by the access network device may alternatively be implemented by a component (for example, a chip or a circuit) of the access network device. The methods and operations implemented by the terminal device may alternatively be implemented by a component (for example, a chip or a circuit) of the terminal device. The methods and operations implemented by the user plane function network element may alternatively be implemented by a component (for example, a chip or a circuit) of the user plane function network element. This is not limited. In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

It should be understood that the first network element, the access network device, the terminal device, and the user plane function network element may perform some or all of the steps in the foregoing embodiments. These steps or operations are merely examples. Embodiments of this application may further perform other operations or variations of various operations. In addition, the steps may be performed in another sequence different from that presented in the foregoing embodiments, and not all the operations in the foregoing embodiments may be performed.

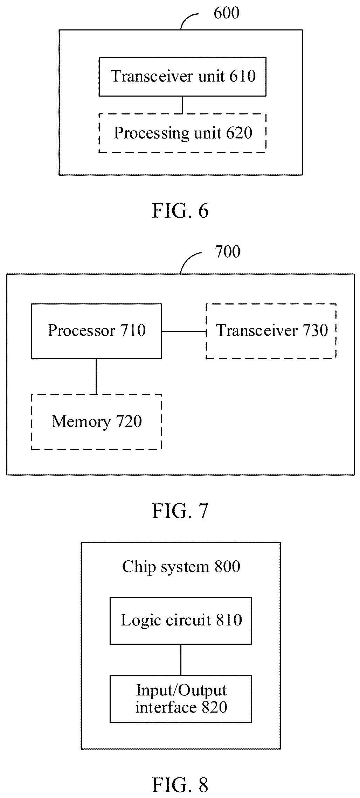

The foregoing describes in detail the communication methods provided in embodiments of this application with reference to FIG. 3 to FIG. 5. The following describes in detail the communication apparatuses provided in embodiments of this application with reference to FIG. 6 to FIG. 8. It should be understood that descriptions of apparatus embodiments correspond to the descriptions of the method embodiments. Therefore, for content that is not described in detail, refer to the foregoing method embodiments. For brevity, details of a part of content are not described herein again.

FIG. 6 is a block diagram of a communication apparatus according to an embodiment of this application. The apparatus 600 includes a transceiver unit 610, and the transceiver unit 610 may be configured to implement a corresponding communication function. The transceiver unit 610 may also be referred to as a communication interface or a communication unit.

Optionally, the apparatus 600 may further include a processing unit 620, and the processing unit 620 may be configured to perform data processing.

Optionally, the apparatus 600 further includes a storage unit. The storage unit may be configured to store instructions and/or data. The processing unit 620 may read the instructions and/or the data in the storage unit, the apparatus is caused to implement actions of different devices in the foregoing method embodiments, for example, actions of the first network element, the access network device, the terminal device, or the user plane function network element.

The apparatus 600 may be configured to perform actions performed by the first network element, the access network device, the terminal device, or the user plane function network element in the foregoing method embodiments. In this case, the apparatus 600 may be the first network element, the access network device, the terminal device, or the user plane function network element, or a component of the first network element, the access network device, the terminal device, or the user plane function network element. The transceiver unit 610 is configured to perform sending and receiving-related operations of the first network element, the access network device, the terminal device, or the user plane function network element in the foregoing method embodiments. The processing unit 620 is configured to perform processing-related operations of the first network element, the access network device, the terminal device, or the user plane function network element in the foregoing method embodiments.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 600 may be specifically the first network element, the access network device, the terminal device, or the user plane function network element in the foregoing embodiments, and may be configured to perform each procedure and/or step corresponding to the first network element, the access network device, the terminal device, or the user plane function network element in the foregoing method embodiments. Alternatively, the apparatus 600 may be specifically the first network element, the access network device, the terminal device, or the user plane function network element in the foregoing embodiments, and may be configured to perform each procedure and/or step corresponding to the first network element, the access network device, the terminal device, or the user plane function network element in the foregoing method embodiments. To avoid repetition, details are not described herein again.

The apparatus 600 in the foregoing solutions has a function of implementing corresponding steps performed by the first network element, the access network device, the terminal device, or the user plane function network element in the foregoing methods, or the apparatus 600 in the foregoing solutions has a function of implementing corresponding steps performed by the first network element, the access network device, the terminal device, or the user plane function network element in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform sending and receiving operations and related processing operations in the method embodiments.

In addition, the transceiver unit 610 may alternatively be a transceiver circuit (which may include, for example, a receiving circuit and a sending circuit), and the processing unit may be a processing circuit.

It should be noted that the apparatus in FIG. 6 may be the network element or the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

As shown in FIG. 7, an embodiment of this application provides another communication apparatus 700. The apparatus 700 includes a processor 710. The processor 710 is coupled to a memory 720, the memory 720 is configured to store a computer program or instructions and/or data, and the processor 710 is configured to execute the computer program or the instructions stored in the memory 720, or read the data stored in the memory 720, to perform the methods in the foregoing method embodiments.

Optionally, there are one or more processors 710.

Optionally, there are one or more memories 720.

Optionally, the memory 720 and the processor 710 are integrated together, or are disposed separately.

Optionally, as shown in FIG. 7, the apparatus 700 further includes a transceiver 730, and the transceiver 730 is configured to receive and/or send a signal. For example, the processor 710 is configured to control the transceiver 730 to receive and/or send the signal.

In a solution, the apparatus 700 is configured to implement operations performed by the first network element, the access network device, the terminal device, or the user plane function network element in the foregoing method embodiments.

For example, the processor 710 is configured to execute the computer program or the instructions stored in the memory 720 to implement related operations of the first network element in the foregoing method embodiments, for example, the first network element in any one of the embodiments shown in FIG. 3 to FIG. 5, or implement the method of the first network element in any one of the embodiments shown in FIG. 3 to FIG. 5.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

As shown in FIG. 8, an embodiment of this application provides a chip system 800. The chip system 800 (or may be referred to as a processing system) includes a logic circuit 810 and an input/output interface (input/output interface) 820.

The logic circuit 810 may be a processing circuit in the chip system 800. The logic circuit 810 may be coupled to a storage unit, and invoke instructions in the storage unit, so that the chip system 800 can implement the methods and functions in embodiments of this application. The input/output interface 820 may be an input/output circuit in the chip system 800, and outputs information processed by the chip system 800, or inputs to-be-processed data or signaling information to the chip system 800 for processing.

In a solution, the chip system 800 is configured to implement operations performed by the first network element, the access network device, the terminal device, or the user plane function network element in the foregoing method embodiments.

For example, the logic circuit 810 is configured to implement a processing-related operation of the first network element in the foregoing method embodiments, for example, a processing-related operation of the first device in any one of the embodiments shown in FIG. 3 to FIG. 5. The input/output interface 820 is configured to implement a sending and/or receiving-related operation of the first device in the foregoing method embodiments, for example, a sending and/or receiving-related operation of the first network element in any one of the embodiments shown in FIG. 3 to FIG. 5.

An embodiment of this application further provides a computer-readable storage medium. The computer-readable storage medium stores computer instructions used to implement the methods performed by the first network element, the access network device, the terminal device, or the user plane function network element in the foregoing method embodiments.

For example, when the computer program is executed by a computer, the computer is caused to implement the method performed by the first network element, the access network device, the terminal device, or the user plane function network element in the foregoing method embodiments.

An embodiment of this application further provides a computer program product, including instructions. When the instructions are executed by a computer, the method performed by the first network element, the access network device, the terminal device, or the user plane function network element in the foregoing method embodiments is implemented.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first network element, request information from a second network element, wherein the request information indicates to perform an operation on a terminal device, and the terminal device is a device that supports a passive internet of things service;
obtaining, by the first network element, first indication information based on the request information;
determining, by the first network element based on the first indication information, that transmission of uplink data of the terminal device is performed via user plane; and
sending, by the first network element, second indication information to an access network device, wherein the second indication information indicates that the transmission of the uplink data of the terminal device is performed via the user plane, or the second indication information indicates the access network device to determine that the transmission of the uplink data of the terminal device is performed via the user plane.

2. The method according to claim 1, wherein the method further comprises:
obtaining, by the first network element, address information of a user plane function network element from a session management function network element or the user plane function network element; or
obtaining, by the first network element, address information of a user plane function network element from information stored in the first network element; and
after the determining, by the first network element based on the first indication information, that the transmission of the uplink data of the terminal device is performed via the user plane, the method further comprises:
sending, by the first network element, the address information of the user plane function network element to the access network device.

3. The method according to claim 1 or 2, wherein the method further comprises:
sending, by the first network element, third indication information to the access network device, wherein the third indication information indicates the terminal device to encapsulate the data by using an application layer protocol.

4. The method according to any one of claims 1 to 3, wherein the method further comprises:
obtaining, by the first network element, a correspondence between an identifier of the second network element and address information of the second network element from a unified database network element; and
sending, by the first network element, the correspondence between the identifier of the second network element and the address information of the second network element to the user plane function network element.

5. The method according to claim 4, wherein the sending, by the first network element, the address information of the user plane function network element to the access network device comprises:
sending, by the first network element, user plane transmission layer information to the access network device, wherein the user plane transmission layer information comprises a tunnel endpoint identifier and the address information of the user plane function network element.

6. The method according to any one of claims 1 to 5, wherein the request information comprises the first indication information.

7. The method according to any one of claims 1 to 5, wherein the request information comprises the identifier of the second network element, and the obtaining, by the first network element, the first indication information based on the request information comprises:
obtaining, by the first network element, subscription data of the second network element based on the identifier of the second network element, wherein the subscription data comprises the first indication information.

8. A communication method, comprising:
receiving, by an access network device, second indication information from a first network element, wherein the second indication information indicates that transmission of uplink data of a terminal device is performed via a user plane, or the second indication information indicates the access network device to determine that transmission of the uplink data of the terminal device is performed via the user plane; and
sending, by the access network device, third indication information to the terminal device based on the second indication information, wherein the third indication information indicates the terminal device to encapsulate the data by using an application layer protocol, and the terminal device is a device that supports a passive internet of things service.

9. The method according to claim 8, wherein when the second indication information indicates the access network device to determine that the transmission of the uplink data of the terminal device is performed by the user plane, the sending, by the access network device, the third indication information to the terminal device based on the second indication information comprises:
when the access network device finds a user plane transmission instruction in configuration information of the access network device based on the second indication information, determining, by the access network device, that the transmission of the uplink data of the terminal device is performed via the user plane; and
sending, by the access network device, the third indication information to the terminal device.

10. The method according to claim 8 or 9, wherein the method further comprises:
obtaining, by the access network device, a correspondence between address information of a user plane function network element and an identifier of a second network element;
receiving, by the access network device, a first data packet from the terminal device, wherein the first data packet comprises the data encapsulated by using the application layer protocol, and/or the identifier of the second network element;
determining, by the access network device, the address information of the user plane function network element based on the identifier of the second network element and the correspondence between the address information of the user plane function network element and the identifier of the second network element; and
sending, by the access network device, the first data packet to the user plane function network element based on the address information of the user plane function network element.

11. The method according to claim 10, wherein the obtaining, by the access network device, the correspondence between the address information of the user plane function network element and the identifier of the second network element comprises:
receiving, by the access network device, the correspondence between the address information of the user plane function network element from the first network element and the identifier of the second network element; or
obtaining, by the access network device, the correspondence between the address information of the user plane function network element and the identifier of the second network element from the configuration information of the access network device.

12. The method according to any one of claims 8 to 11, wherein the method further comprises:
receiving, by the access network device, user plane transmission layer information from the first network element and the identifier of the second network element, wherein the user plane transmission layer information comprises a tunnel endpoint identifier and the address information of the user plane function network element.

13. The method according to any one of claims 8 to 12, wherein the method further comprises:
receiving, by the access network device, the third indication information from the first network element.

14. The method according to any one of claims 8 to 13, wherein the method further comprises:
receiving, by the access network device, fourth indication information from the terminal device, wherein the fourth indication information indicates that transmission of the first data packet is performed via the user plane, and the first data packet comprises the data encapsulated by using the application layer protocol, and/or the identifier of the second network element.

15. A communication apparatus, comprising:
a processor, configured to execute a computer program stored in a memory, to cause the communication apparatus to perform the method according to any one of claims 1 to 14.

16. A computer-readable storage medium, wherein the computer-readable storage medium stores a computer program or instructions, and when the computer program or the instructions are executed by a processor, the method according to any one of claims 1 to 14 is performed.

17. A computer program product comprising instructions, wherein when the computer program product runs on a computer, the method according to any one of claims 1 to 14 is performed.

18. A chip system, comprising a processor, configured to invoke a computer program or instructions from a memory and run the computer program or the instructions, to cause a communication apparatus in which the chip system is installed to implement the method according to any one of claims 1 to 14.
